# EUROPEAN PATENT APPLICATION

(11) **EP 4 686 295 A1**
(43) Date of publication of application: **28.01.2026**
(21) Application number: 24784128.1
(22) Date of filing: 27.03.2024
(51) Int. Cl.: H04W 72/231

(54) **COMMUNICATION METHOD AND APPARATUS, AND STORAGE MEDIUM AND CHIP SYSTEM**

(30) Priority: 07.04.2023 CN 202310417617
(71) Applicant: Huawei Technologies Co., Ltd., Shenzhen, Guangdong 518129 (CN)
(72) Inventor: JIAO, Minghan, Shenzhen, Guangdong 518129 (CN); LI, Ruijie, Shenzhen, Guangdong 518129 (CN); GUAN, Lei, Shenzhen, Guangdong 518129 (CN)
(74) Representative: Gill Jennings & Every LLP
(86) International application number: PCT/CN2024/084003
(87) International publication number: WO 2024/208043

(57) **Abstract**

Embodiments of this application provide a communication method and apparatus, a storage medium, and a chip system. The method includes: A terminal device receives first indication information from a network device, where the first indication information indicates a first DTX configuration, the first DTX configuration includes skipping transmitting a first channel in a first cell within a first time period, and the first channel does not include one or more of the following signals: a CSI-RS used for beam failure recovery BFR of the first cell or an SR used for the BFR of the first cell. After the terminal device detects a beam failure in the first cell, the terminal device performs BFR within the first time period based on the CSI-RS used for the BFR of the first cell and/or the SR used for the BFR of the first cell. According to embodiments of this application, BFR may be performed within inactive time in an energy saving configuration, to ensure correct running of a communication system.

## Description

This application claims priority to Chinese Patent Application No. 202310417617.2, filed with the China National Intellectual Property Administration on April 7, 2023, and entitled "COMMUNICATION METHOD AND APPARATUS, STORAGE MEDIUM, AND CHIP SYSTEM", which is incorporated herein by reference in its entirety.

### TECHNICAL FIELD

This application relates to the field of communication technologies, and in particular, to a communication method and apparatus, a storage medium, and a chip system.

### BACKGROUND

With development of communication, transmission bandwidth of a network is increasingly large, and power consumption of a network device is also increasing. In a possible energy saving manner, when load of the network device is not heavy, an active cycle or an inactive cycle may be configured for each cell of the network device. Each cycle is divided into active time and inactive time. Within the inactive time, the network device and a terminal device may not transmit some signals, to implement energy saving. Therefore, which type of signal should not be transmitted by the network device within the inactive time is a current research hotspot.

When a beam failure occurs in a cell of a terminal device in a connected state, the terminal reports beam failure detection and a candidate new beam to the network device, to establish a beam connection. This process is referred to as beam failure recovery. In the foregoing energy saving configuration of the network device, how to balance energy saving of the network device and the beam failure recovery is a problem that needs to be considered.

### SUMMARY

Embodiments of this application provide a communication method and apparatus, a storage medium, and a chip system, so that a terminal device can perform BFR in inactive time (that is, time when the terminal device does not transmit a first channel in a first cell, that is, time when the terminal device is in an inactive state in the first cell, where the inactive state is that the terminal device does not transmit the first channel), to ensure correct running of a communication system.

A first aspect of an embodiment of this application provides a communication method. The communication method may be performed by a terminal device. The terminal device in this application may be a terminal apparatus, or may be a chip, a unit, or a module in the terminal apparatus. The terminal device may be a communication apparatus or a chip, a unit, or a module in the communication apparatus.

The method may include: receiving first indication information, where the first indication information indicates a first discontinuous transmission DTX configuration, the first DTX configuration includes skipping transmitting a first channel in a first cell within a first time period, and the first channel does not include one or more of the following signals: a channel state information reference signal CSI-RS used for beam failure recovery BFR of the first cell or a scheduling request SR used for the first cell; and after detecting a beam failure in the first cell, the terminal device performs BFR within the first time period based on the CSI-RS used for the BFR of the first cell and/or the SR used for the BFR of the first cell.

In the method, within inactive time in an energy saving configuration, a network device or the terminal device does not transmit the first channel in the first cell, to implement energy saving. In addition, in the method, the first channel excludes the CSI-RS used for the BFR of the first cell and the SR used for the BFR of the first cell, so that the terminal device can perform BFR within the inactive time in the energy saving configuration. Therefore, efficiency of a beam failure recovery process can be improved, and communication quality can be improved.

In a possible implementation, when the first cell is a special cell SpCell, after the terminal device detects the beam failure in the SpCell, that the terminal device performs BFR within the first time period based on the CSI-RS used for the BFR of the first cell and/or the SR used for the first cell includes:

The terminal device transmits the first channel within the first time period when one or more of the following cases occur:
after a random access channel RACH used for the BFR is sent, a random access response RAR used for the BFR is received;
after a RACH used for the BFR is sent, an automatic repeat request-acknowledgement HARQ-ACK corresponding to an RAR used for the BFR is sent;
a RACH used for the BFR is sent and random access is to be completed;
a RACH used for the BFR is sent and the BFR of the SpCell is to be completed;
a beam failure recovery timer beamFailureRecoveryTimer is started and the beam failure recovery timer has not expired or stopped;
a random access contention resolution timer ra-ContentionResolutionTimer is started and the random access contention resolution timer has not expired or stopped, a random access message B-receive time window MsgB-ResponseWindow is started and the random access message B-receive time window has not expired or stopped, or a random access response time window ra-ResponseWindow is started and the random access response time window has not expired or stopped; or
a discontinuous reception-inactivity timer drx-InactivityTimer is started and the discontinuous reception-inactivity timer has not expired or stopped, a discontinuous reception-downlink retransmission timer drx-RetransmissionTimerDL is started and the discontinuous reception-downlink retransmission timer has not expired or stopped, or a discontinuous reception-uplink retransmission timer drx-RetransmissionTimerUL is started and the discontinuous reception-uplink retransmission timer has not expired or stopped.

In a possible implementation, when the first cell is a secondary cell SCell, after the terminal device detects the beam failure in the SCell, that the terminal device performs BFR within the first time period based on the CSI-RS used for the BFR of the first cell and/or the SR used for the BFR of the first cell includes:

The terminal device transmits the first channel within the first time period when one or more of the following cases occur:
a scheduling request SR used for the BFR of the SCell is sent and the SR is in a pending state pending, or an SR transmission timer sr-ProhibitTimer on a physical uplink control channel is started and the sr-ProhibitTimer has not expired or stopped;
a medium access control control element MAC CE used for the BFR is sent before an uplink grant UL grant that is used to schedule initial transmission (new transmission) data and that uses a same automatic repeat request process HARQ process as the MAC CE used for the BFR is received;
a medium access control control element MAC CE used for the BFR is sent before a physical uplink shared channel PUSCH corresponding to a UL grant that is used to schedule initial transmission data and that uses a same automatic repeat request process HARQ process as the MAC CE used for the BFR is sent;
an SR used for the BFR of the SCell is sent before a UL grant that is used to schedule initial transmission data and that uses a same automatic repeat request process HARQ process as a MAC CE used for the BFR is received;
an SR used for the BFR of the SCell is sent before a PUSCH corresponding to a UL grant that is used to schedule initial transmission data and that uses a same automatic repeat request process HARQ process as a MAC CE used for the BFR is sent; or
a drx-InactivityTimer is started and the drx-InactivityTimer has not expired or stopped, a drx-RetransmissionTimerDL is started and the drx-RetransmissionTimerDL has not expired or stopped, or a drx-RetransmissionTimerUL is started and the drx-RetransmissionTimerUL has not expired or stopped.

Therefore, after detecting the beam failure in the SCell, the terminal device configured with the first DTX configuration may remain in an active state, that is, may transmit the first channel, when one or more of the foregoing cases occur.

A second aspect of an embodiment of this application provides a communication method. The communication method may be performed by a terminal device. The terminal device in this application may be a terminal apparatus, or may be a chip, a unit, or a module in the terminal apparatus. The terminal device may be a communication apparatus or a chip, a unit, or a module in the communication apparatus.

The method may include: receiving first indication information, where the first indication information indicates a first DTX configuration, and the first DTX configuration includes that the terminal device is in an inactive state within a first time period in a first cell; and after detecting a beam failure in the first cell, the terminal device starts contention-based random access CBRA within the first time period to perform BFR.

In the method, after the terminal device configured with the first DRX detects the beam failure in the first cell within inactive time, the terminal device may start the contention-based random access CBRA to perform BFR. If the first cell is an SpCell, in comparison with first performing CFRA and then performing CBRA when the CFRA fails in a normal BFR procedure, steps of performing BFR of the first cell are simplified, less extra active time is defined, and more signals/channels may not be detected within the first time period, to further reduce power consumption of the terminal device and/or a network device.

In a possible implementation, the first DTX configuration includes: The terminal device does not transmit a first channel in the first cell within the first time period, and the first channel does not include one or more of the following signals: a CSI-RS used for BFR of the first cell or an SR used for the BFR of the first cell.

In a possible implementation, after the terminal device detects the beam failure in the first cell, that the terminal device starts the contention-based random access CBRA within the first time period to perform BFR includes:
including a MAC CE used for the BFR in an MsgA or an Msg3.

If the first cell is configured to support a two-step RACH, the MsgA includes the MAC CE used for the BFR. If the first cell is configured to support a four-step RACH, the Msg3 includes the MAC CE used for the BFR. The MAC CE indicates that the beam failure occurs in the first cell, and the terminal device may start the contention-based random access CBRA within the first time period to perform BFR.

In a possible implementation, when the first cell is an SpCell, after the terminal device detects the beam failure in the SpCell, that the terminal device starts the contention-based random access CBRA within the first time period to perform BFR includes:
the terminal device is in an active state within the first time period when one or more of the following cases occur:
an ra-ContentionResolutionTimer is started and the ra-ContentionResolutionTimer has not expired or stopped, an MsgB-ResponseWindow is started and the MsgB-ResponseWindow has not expired or stopped, or an ra-ResponseWindow is started and the ra-ResponseWindow has not expired or stopped;
a random access channel RACH is sent and random access is to be completed;
a RACH is sent and the BFR of the SpCell is to be completed; or
a drx-InactivityTimer is started and the drx-InactivityTimer has not expired or stopped, a drx-RetransmissionTimerDL is started and the drx-RetransmissionTimerDL has not expired or stopped, or a drx-RetransmissionTimerUL is started and the drx-RetransmissionTimerUL has not expired or stopped.

In a possible implementation, when the first cell is an SCell, after the terminal device detects the beam failure in the SCell, that the terminal device starts the contention-based random access CBRA within the first time period to perform BFR includes:
the terminal device is in an active state within the first time period when one or more of the following cases occur:
a MAC CE used for the BFR is sent before a UL grant that is used to schedule initial transmission data and that uses a same HARQ process as the MAC CE used for the BFR is received;
a MAC CE used for the BFR is sent before a PUSCH corresponding to a UL grant that is used to schedule initial transmission data and that uses a same HARQ process as the MAC CE used for the BFR is sent;
a drx-InactivityTimer is started and the drx-InactivityTimer has not expired or stopped, a drx-RetransmissionTimerDL is started and the drx-RetransmissionTimerDL has not expired or stopped, or a drx-RetransmissionTimerUL is started and the drx-RetransmissionTimerUL has not expired or stopped;
an ra-ContentionResolutionTimer is started and the ra-ContentionResolutionTimer has not expired or stopped, an MsgB-ResponseWindow is started and the MsgB-ResponseWindow has not expired or stopped, or an ra-ResponseWindow is started and the ra-ResponseWindow has not expired or stopped;
a RACH is sent and random access is to be completed; or
a RACH is sent and the BFR of the SpCell is to be completed.

It can be learned that when being in the inactive state, the terminal device configured with the first DTX configuration does not transmit the first channel in the first cell within the first time period. When the terminal device is in a first state, the terminal device is in the active state within the first time period, that is, the terminal device may transmit the first channel in the first cell within the first time period.

In a possible implementation, when the first cell is an SCell, after the terminal device detects the beam failure in the SCell, that the terminal device starts the contention-based random access CBRA within the first time period to perform BFR includes:
When performing BFR, if there is no available uplink shared channel UL-SCH resource (for example, there is no UL-SCH resource that may be used to send a MAC CE used for the BFR or a truncated MAC CE used for the BFR), the terminal starts the contention-based random access CBRA to perform BFR. It can be learned that when there is no available uplink resource, the terminal device may start the contention-based random access CBRA to perform BFR. In the first DTX configuration, more channels/signals may be managed and controlled, so that power consumption of the network device and/or the terminal device can be further reduced.

The method according to the first aspect or the second aspect includes but is not limited to the following possible implementations:
In a possible implementation, the first channel includes one or more of the following: an uplink channel and a downlink channel.

In another possible implementation, the uplink channel includes one or more of the following: a configured grant physical uplink shared channel CG PUSCH, a semi-persistent scheduling physical downlink shared channel SPS PDSCH, a hybrid automatic repeat request feedback HARQ-ACK, a scheduling request SR, a physical random access channel, a random access message A, or a random access message 3.

In another possible implementation, the downlink channel includes one or more of the following: a physical downlink control channel PDCCH scrambled by a modulation and coding scheme-cell radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal or physical broadcast channel block SSB, system information, a paging message, a random access message 2, a random access message 4, a random access message B, or a semi-persistent scheduling physical downlink shared channel SPS PDSCH.

It can be learned that the network device and/or the terminal device may be configured with the first DTX configuration. A channel type included in the first channel includes a downlink channel type and an uplink channel type. It can be learned that, in the first DTX configuration, types of the downlink channel and the uplink channel transmitted between the terminal device and the network device can be controlled, so that a quantity of channels transmitted by the terminal device and/or the network device within the first time period can be reduced, thereby reducing power consumption of the terminal device and/or the network device.

In a possible implementation, the method may further include: receiving second indication information, where the second indication information indicates to deactivate the first cell, and determining that the BFR succeeds or determining not to transmit the first channel in the first cell within the first time period, that is, the first state is invalid.

The second indication information may be a deactivation instruction of the first cell. When the terminal device receives the deactivation instruction, it may be considered that a BFR process is completed or the first channel is no longer transmitted in the first cell within the first time period. Therefore, the terminal device and/or the network device may end the active state (that is, a state of transmitting the first channel in the first cell) as soon as possible, to reduce power consumption of the terminal device and/or the network device.

In a possible implementation, the first indication information includes one or more of the following: RRC signaling, a medium access control control element MAC CE, or downlink control information DCI. The first indication information is transmitted based on the RRC signaling, the MAC CE, or the DCI, to configure or activate the terminal device. This is more direct and simpler.

In a possible implementation, the first indication information may be unicast, multicast, or broadcast RRC signaling.

In a possible implementation, the first indication information may be a unicast, multicast, or broadcast MAC CE or unicast, multicast, or broadcast DCI.

In another possible implementation, the first indication information is a MAC CE or DCI, and before receiving the first indication information, the method further includes: receiving first configuration information, where the first configuration information includes configuration information of one or more cycles, the first time period is a time period in a target cycle, the target cycle is one of the one or more cycles, and the first indication information is used to activate a configuration for the target cycle in the first configuration information, so that the terminal device is in the inactive state within the first time period in the first cell.

It can be learned that, when the first indication information is transmitted based on the MAC CE or the DCI, the first configuration information may be received, to configure a plurality of cycle configurations, so that the network device can activate or deactivate a most appropriate cycle configuration in different load cases, and the configuration is more flexible, to improve communication efficiency.

In a possible implementation, the first indication information is DCI, the DCI is carried on a PDCCH scrambled by a first radio network temporary identifier RNTI, the first RNTI is a newly added radio network temporary identifier, and the PDCCH scrambled by the first RNTI does not belong to the first channel. It can be learned that an RNTI in a new format is designed, so that the PDCCH scrambled by the first RNTI does not belong to the type of the first channel, that is, the PDCCH may be transmitted within the first time period, so that the network device configured with the first DTX configuration can notify, at any moment, the terminal device to perform activation or deactivation.

In another possible implementation, the first indication information is DCI, the DCI is carried on a PDCCH scrambled by a second RNTI, the DCI includes a first indication field, the second RNTI is an existing radio network temporary identifier, and the first indication field indicates that the DCI is used to configure the first DTX configuration, that is, distinguishes functions of the first indication information and another PDCCH scrambled by the second RNTI, that is, indicates that the first indication information indicates that the terminal device does not transmit the first channel in the first cell within the first time period. It can be learned that the second RNTI is in a format existing in an existing protocol, and an original function (for example, indicating data transmission scheduling) and a new function (indicating that the first channel is not transmitted within the first time period) are distinguished by using the first indication field. Therefore, no new DCI format is introduced when the first DTX configuration is configured, to reduce check complexity of a cyclic redundancy check (cyclic redundancy check, CRC) code.

In another possible implementation, the first indication information is DCI, the DCI is obtained by adding one or more fields to an existing DCI format, and the added one or more added fields are used to activate or deactivate the first DTX configuration, that is, indicate that the first channel is not transmitted in the first cell within the first time period. Therefore, when the first DTX configuration is configured, an additional quantity of times of blind detection may not be increased, and the original function of the existing DCI format is not affected.

In a possible implementation, the method further includes:
receiving second configuration information before receiving the first indication information. The terminal device activates a first cycle of the first cell in the second configuration information based on the first indication information, where the first cycle indicates that the terminal device does not transmit the first channel in the first cell within the first time period, and the second configuration information includes configuration information of one or more cycles of each of one or more cells. The first cell is one of the one or more cells, the one or more cells are serving cells of the terminal device, the first cycle is one of one or more cycles of the first cell, and the first time period is a time period in the first cycle. In a possible implementation, the first indication information further indicates that one of one or more cycles of each of cells other than the first cell in the one or more cells takes effect, that is, the first indication information may be further used to activate one of the one or more cycles of each of the other cells.

It may be understood that the first indication information may indicate a cycle configuration of one or more cells, the first cell belongs to the one or more cells, and the cycle configuration is activated when the first indication information is received. The cycle configuration of the one or more cells may be activated at a time by using the first indication information, so that a quantity of transmission bits is small and overheads are low.

A third aspect of an embodiment of this application provides a communication method. The method may include: sending first indication information to a terminal device, where the first indication information indicates a first DTX configuration, the first DTX configuration includes skipping transmitting a first channel in a first cell within a first time period, and the first channel does not include one or more of the following signals: a CSI-RS used for BFR of the first cell or an SR used for the BFR of the first cell.

In the method, the communication method may be performed by a network device. The network device in this application may be a network apparatus, or a chip, a unit, or a module in a terminal apparatus. The terminal device may be a communication apparatus, or a chip, a unit, or a module in the communication apparatus.

In a possible implementation, when the first cell is a special cell SpCell, the method may further include:
The network device transmits the first channel within the first time period when one or more of the following cases occur:
after a RACH used for the BFR is received, an RAR used for the BFR is sent;
after a RACH used for the BFR is received, a HARQ-ACK corresponding to an RAR used for the BFR is received;
a RACH used for the BFR is received and random access is to be completed; or
a RACH used for the BFR is received and the BFR of the SpCell is to be completed.

In a possible implementation, when the first cell is a special cell SCell, the method may further include:
The network device transmits the first channel within the first time period when one or more of the following cases occur:
a scheduling request SR used for the BFR of the SCell is received and the SR is in a pending state pending;
a medium access control control element MAC CE used for the BFR is received before a UL grant that is used to schedule initial transmission data and that uses a same automatic repeat request process HARQ process as the MAC CE used for the BFR is sent;
a medium access control control element MAC CE used for the BFR is received before a physical uplink shared channel PUSCH corresponding to a UL grant that is used to schedule initial transmission data and that uses a same automatic repeat request process HARQ process as the MAC CE used for the BFR is received;
an SR used for the BFR of the SCell is received before a UL grant that is used to schedule initial transmission data and that uses a same automatic repeat request process HARQ process as a MAC CE used for the BFR is sent; or
an SR used for the BFR of the SCell is received before a PUSCH corresponding to a UL grant that is used to schedule initial transmission data and that uses a same automatic repeat request process HARQ process as a MAC CE used for the BFR is received.

A fourth aspect of an embodiment of this application provides a communication method. The method may include: sending first indication information to a terminal device, where the first indication information indicates a first DTX configuration, and the first DTX configuration includes that the terminal device is in an inactive state within a first time period in a first cell.

In the method, the communication method may be performed by a network device. The network device in this application may be a network apparatus, or a chip, a unit, or a module in a terminal apparatus. The terminal device may be a communication apparatus, or a chip, a unit, or a module in the communication apparatus.

In a possible implementation, the first DTX configuration includes skipping transmitting a first channel in the first cell within the first time period, and the first channel includes one or more of the following signals: a CSI-RS used for BFR of the first cell or an SR used for the BFR of the first cell.

In a possible implementation, that the network device starts contention-based random access CBRA within the first time period to perform BFR includes: including a MAC CE used for the BFR in an MsgA or an Msg3.

In a possible implementation, when the first cell is a special cell SpCell, the method may further include:
The network device is in an active state within the first time period when one or more of the following cases occur:
a random access channel RACH is received and random access is to be completed; or
a RACH is received and the BFR of the SpCell is to be completed.

In a possible implementation, when the first cell is a special cell SCell, the method may further include:
The network device is in an active state within the first time period when one or more of the following cases occur:
a MAC CE used for the BFR is received before a UL grant that is used to schedule initial transmission data and that uses a same HARQ process as the MAC CE used for the BFR is sent;
a MAC CE used for the BFR is received before a PUSCH corresponding to a UL grant that is used to schedule initial transmission data and that uses a same HARQ process as the MAC CE used for the BFR is received;
a RACH is received and random access is to be completed; or
a RACH is received and the BFR of the SpCell is to be completed.

In a possible implementation, after the terminal device detects a beam failure in the SCell, when there is no available uplink resource within the first time period, the network device starts the contention-based random access CBRA to perform BFR.

The method according to the third aspect or the fourth aspect includes but is not limited to the following possible implementations:
In a possible implementation, the first channel includes one or more of the following: an uplink channel and a downlink channel.

In another possible implementation, the uplink channel includes one or more of the following: a configured grant physical uplink shared channel CG PUSCH, a semi-persistent scheduling physical downlink shared channel SPS PDSCH, a hybrid automatic repeat request feedback HARQ-ACK, a scheduling request SR, a physical random access channel, a random access message A, or a random access message 3.

In another possible implementation, the downlink channel includes one or more of the following: a physical downlink control channel PDCCH scrambled by a modulation and coding scheme-cell radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal or a physical broadcast channel block SSB, system information, a paging message, a random access message 2, a random access message 4, a random access message B, or a semi-persistent scheduling physical downlink shared channel SPS PDSCH.

It can be learned that the network device and/or the terminal device may be configured with the first DTX configuration. A channel type included in the first channel includes a downlink channel type and an uplink channel type. It can be learned that, in the first DTX configuration, types of the downlink channel and the uplink channel transmitted between the terminal device and the network device can be controlled, so that a quantity of channels transmitted by the terminal device and/or the network device within the first time period can be reduced, thereby reducing power consumption of the terminal device and/or the network device.

In a possible implementation, the method may further include: sending second indication information, where the second indication information indicates to deactivate the first cell, and determining that the BFR succeeds or determining not to transmit the first channel in the first cell within the first time period.

The second indication information may be a deactivation instruction of the first cell. When the terminal device receives the deactivation instruction, it may be considered that a BFR process is completed or the first channel is not transmitted in the first cell within the first time period. Therefore, the terminal device and/or the network device may end the active state (that is, a state of transmitting the first channel in the first cell) as soon as possible, to reduce power consumption of the terminal device and/or the network device.

In a possible implementation, the first indication information includes one or more of the following: RRC signaling, a medium access control control element MAC CE, or downlink control information DCI. The first indication information is transmitted based on the RRC signaling, the MAC CE, or the DCI, to configure or activate the terminal device. This is more direct and simpler.

In a possible implementation, the first indication information may be unicast, multicast, or broadcast RRC signaling.

In a possible implementation, the first indication information may be a unicast, multicast, or broadcast MAC CE or unicast, multicast, or broadcast DCI.

In another possible implementation, the first indication information is a MAC CE or DCI, and before receiving the first indication information, the method further includes: sending first configuration information, where the first configuration information includes configuration information of one or more cycles, the first time period is a time period in a target cycle, the target cycle is one of the one or more cycles, and the first indication information is used to activate a configuration for the target cycle in the first configuration information, so that the terminal device is in the inactive state within the first time period in the first cell.

In a possible implementation, the first indication information is DCI, the DCI is carried on a PDCCH scrambled by a first RNTI, the first RNTI is a newly added radio network temporary identifier, and the PDCCH scrambled by the first RNTI does not belong to the first channel. It can be learned that an RNTI in a new format is designed, so that the DCI scrambled by the first RNTI does not belong to the type of the first channel, that is, the PDCCH may be transmitted within the first time period, so that the network device configured with the first DTX configuration can notify, at any moment, the terminal device to perform activation or deactivation.

In another possible implementation, the first indication information is DCI, the DCI is carried on a PDCCH scrambled by a second RNTI, the DCI includes a first indication field, the second RNTI is an existing radio network temporary identifier, and the first indication field indicates that the DCI is used to configure the first DTX configuration, that is, distinguishes functions of the first indication information and another PDCCH scrambled by the second RNTI, that is, indicates that the first indication information indicates that the terminal device is in the inactive state within the first time period. It can be learned that the second RNTI is in a format existing in an existing protocol. Therefore, no new DCI format is introduced when the first DTX configuration is configured, to reduce check complexity of a cyclic redundancy check (cyclic redundancy check, CRC) code.

In another possible implementation, the first indication information is DCI, the DCI is obtained by adding one or more fields to an existing DCI format, and the added one or more added fields are used to activate or deactivate the first DTX configuration, that is, indicate that the first channel is not transmitted in the first cell within the first time period. Therefore, when the first DTX configuration is configured, an additional quantity of times of blind detection may not be increased, and an original function of the existing DCI format is not affected.

In a possible implementation, the method further includes:
before sending the first indication information, sending second configuration information. The second configuration information includes configuration information of one or more cycles of each of one or more cells. The first cell is one of the one or more cells, the one or more cells are serving cells of the terminal device, a first cycle is one of one or more cycles of the first cell, and the first time period is a time period in the first cycle. In a possible implementation, the first indication information further indicates that one of one or more cycles of each of cells other than the first cell in the one or more cells takes effect, that is, the first indication information may be further used to activate one of the one or more cycles of each of the other cells.

It may be understood that the first indication information may indicate a cycle configuration of one or more cells, the first cell belongs to the one or more cells, and the cycle configuration is activated when the first indication information is received. The cycle configuration of the one or more cells may be activated at a time by using the first indication information, so that a quantity of transmission bits is small and overheads are low.

According to a fifth aspect, an embodiment of this application provides a communication apparatus. The communication apparatus may be the network apparatus or the terminal apparatus. The communication apparatus may include a communication unit and a processing unit, to perform any one of the first aspect to the fourth aspect, or perform any one of the possible implementations of the first aspect to the fourth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the fourth aspect, or perform any one of the possible implementations of the first aspect to the fourth aspect.

According to a sixth aspect, an embodiment of this application provides a communication apparatus. The communication apparatus may be the network device or the terminal device. The communication apparatus may include a processor and a memory, to perform any one of the first aspect to the fourth aspect, or perform any one of the possible implementations of the first aspect to the fourth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the fourth aspect, or perform any one of the possible implementations of the first aspect to the fourth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a seventh aspect, a communication apparatus is provided. The communication apparatus may be the network device or the terminal device. The communication apparatus may include a processor, to perform any one of the first aspect to the fourth aspect, or perform any one of the possible implementations of the first aspect to the fourth aspect. The processor is coupled to a memory. Optionally, the communication apparatus further includes the memory. Optionally, the communication apparatus further includes a communication interface, and the processor is coupled to the communication interface.

In an implementation, when the communication apparatus is a network device or a terminal device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a communication system is provided. The communication system includes the foregoing one or more network devices.

In a possible implementation, the system may further include one or more terminal devices.

According to a ninth aspect, a computer program product is provided. The computer program product includes a computer program (which may also be referred to as code or instructions). When the computer program is run, a computer is enabled to perform any one of the first aspect to the fourth aspect, or perform any one of the possible implementations of the first aspect to the fourth aspect.

According to a tenth aspect, a computer-readable storage medium is provided. The computer-readable storage medium stores a computer program (which may also be referred to as code or instructions). When the computer program is run on a computer, the computer is enabled to perform any one of the first aspect to the fourth aspect, or perform any one of the possible implementations of the first aspect to the fourth aspect.

According to an eleventh aspect, a chip system is provided. The chip system may include a processor. The processor is coupled to a memory, and may be configured to perform any one of the first aspect to the fourth aspect, or perform any one of the possible implementations of the first aspect to the fourth aspect. Optionally, the chip system further includes the memory. The memory is configured to store a computer program (which may also be referred to as code or instructions). The processor is configured to: invoke the computer program from the memory, and run the computer program, so that a device on which the chip system is installed performs any one of the first aspect to the fourth aspect, or performs any one of the possible implementations of the first aspect to the fourth aspect.

According to a twelfth aspect, a processing apparatus is provided. The apparatus includes an interface circuit and a processing circuit. The interface circuit may include an input circuit and an output circuit. The processing circuit is configured to: receive a signal through the input circuit, and transmit a signal through the output circuit, so that any one of the first aspect to the fourth aspect or any one of the possible implementations of the first aspect to the fourth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a network device or a terminal device, the interface circuit may be a radio frequency processing chip in the network device or the terminal device, and the processing circuit may be a baseband processing chip in the network device or the terminal device.

In another implementation, the communication apparatus may be some components in a network device or a terminal device, for example, an integrated circuit product like a system chip or a communication chip. The interface circuit may be an input/output interface, an interface circuit, an output circuit, an input circuit, a pin, a related circuit, or the like on the chip or the chip system. The processing circuit may be a logic circuit on the chip.

According to a thirteenth aspect, a communication system is provided, including at least one of the foregoing terminal devices and at least one of the foregoing network devices.

According to a fourteenth aspect, a communication method is provided, including: A network device sends first indication information, and a terminal device receives the first indication information from the network device, where the first indication information indicates a first DTX configuration, the first DTX configuration includes that the terminal device is in an inactive state within a first time period, that is, the terminal device does not transmit a first channel in a first cell within the first time period, and the first channel does not include one or more of the following signals: a CSI-RS used for BFR of the first cell or an SR used for the BFR of the first cell. After the terminal device detects a beam failure in the first cell, the terminal device performs BFR within the first time period based on one or more of the signals that are not included in the first channel. Alternatively, after the terminal device detects a beam failure in the first cell, the terminal device starts contention-based random access CBRA within the first time period to perform BFR.

For optional implementations of the thirteenth aspect, refer to the related descriptions of the first aspect and the fourth aspect.

### BRIEF DESCRIPTION OF DRAWINGS

The following describes accompanying drawings used in embodiments of this application.
FIG. 1 is a diagram of an architecture of a communication system to which an embodiment of this application is applicable;
FIG. 2 is a diagram of power consumption of a typical station according to an embodiment of this application;
FIG. 3 is a schematic flowchart of a random access method to which an embodiment of this application is applicable;
FIG. 4 is a diagram of a format of a MAC CE for beam failure recovery according to an embodiment of this application;
FIG. 5 is a diagram of C-DRX of a terminal device according to an embodiment of this application;
FIG. 6 is a schematic flowchart of a communication method according to an embodiment of this application;
FIG. 7 is a diagram of a possible relationship between a first time period and a second time period according to an embodiment of this application;
FIG. 8 is a diagram of separately configuring a first DTX configuration for different cells of a terminal device according to an embodiment of this application;
FIG. 9 is a schematic flowchart of another communication method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

The technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WIMAX) communication system, and a fifth generation (5th generation, 5G) system or a new radio (new radio, NR) system, or may be applied to a future communication system or another similar communication system.

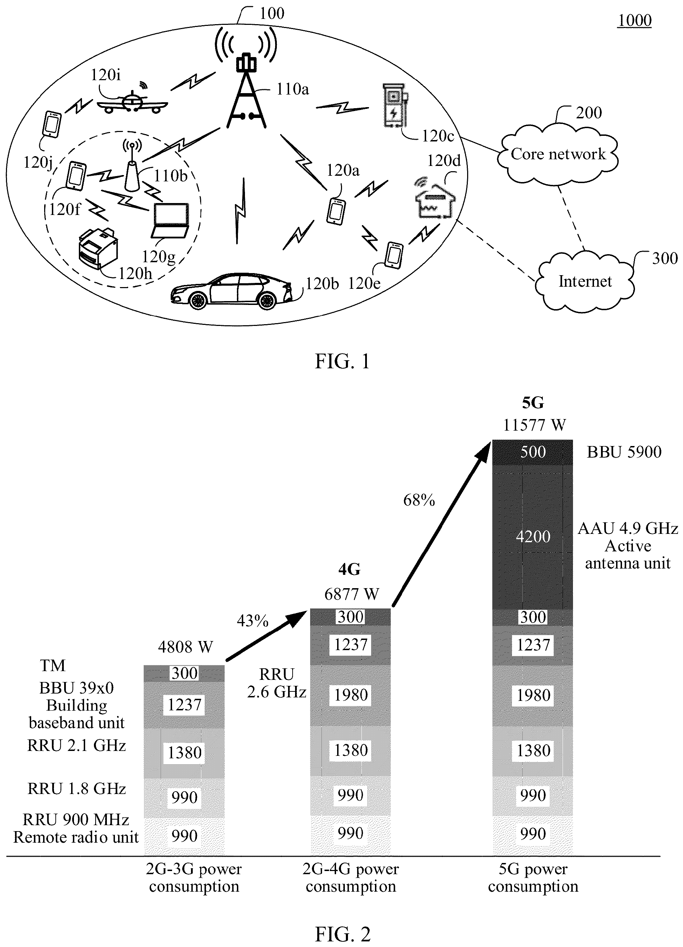

The solutions provided in embodiments of this application may be applied to a communication system 1000 shown in FIG. 1. As shown in FIG. 1, the communication system 1000 includes a radio access network 100 and a core network 200. Both the radio access network 100 and the core network 200 may be connected to an internet 300. The radio access network 100 may include at least one access network device (for example, 110a and 110b in FIG. 1, which are collectively referred to as 110), and may further include at least one terminal (for example, a terminal 120a, a terminal 120b, a terminal 120c, a terminal 120d, a terminal 120e, a terminal 120f, a terminal 120g, a terminal 120h, a terminal 120i, and a terminal 120j in FIG. 1, which are collectively referred to as a terminal 120). The terminal 120a to the terminal 120j are connected to the access network device 110a and the access network device 110b in a wireless manner. The access network device 110a and the access network device 110b are connected to the core network 200 in a wireless or wired manner. The core network device in a core network and the access network device in a radio access network may be different physical devices, or may be a same physical device that integrates a logical function of the core network and a logical function of the radio access network. The terminals may be connected to each other in a wireless manner. Access network devices may be connected to each other in a wired or wireless manner. FIG. 1 is merely a diagram for illustration. The communication system may further include another network device, for example, a wireless relay device and/or a wireless backhaul device (not shown in FIG. 1).

The communication system 1000 may support, for example, a cellular system related to the 3rd generation partnership project (3rd generation partnership project, 3GPP) (for example, a 5G communication system, a communication system integrating a plurality of wireless technologies (for example, a communication system integrating at least two of 2G, 3G, 4G, or 5G technology), or future-oriented evolved system (for example, a 6G access technology)), a wireless fidelity (wireless fidelity, Wi-Fi) system, a communication system integrating a 3GPP-related cellular system with another technology, or a future communication system.

The access network device in embodiments of this application is sometimes also referred to as an access node. The access network device has a wireless transceiver function, and is configured to communicate with a terminal. The access network device includes but is not limited to a base station (base station) in the foregoing communication system, an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access network device or a module of the access network device in an open access network ORAN (open RAN, ORAN) system, a base station in a future mobile communication system, an access node in a Wi-Fi system, or the like. Alternatively, the access network device may be a module or a unit that can implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, the CU-CP may also be referred to as an O-CU-CP, the CU-UP may also be referred to as an O-CU-UP, and the RU may also be referred to as an O-RU. The access network device may be a macro base station (for example, 110a in FIG. 1), a micro base station or an indoor station (for example, 110b in FIG. 1), a relay node or a donor node, or a radio controller in a cloud radio access network (cloud radio access network, CRAN) scenario. Optionally, the access network device may alternatively be a server, a wearable device, a vehicle-mounted device, or the like. For example, the access network device in a vehicle-to-everything (vehicle-to-everything, V2X) technology may be a road side unit (road side unit, RSU). A plurality of access network devices in the communication system may be base stations of a same type, or may be base stations of different types. The base station may communicate with a terminal, or may communicate with the terminal through a relay station. The terminal may communicate with a plurality of base stations in different access technologies.

The terminal may also be referred to as a terminal device, a user equipment (user equipment, UE), a mobile station, a mobile terminal, or the like. The terminal may be widely used in various communication scenarios, for example, may be used in device-to-device (device-to-device, D2D) communication, vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, a smart city, or the like. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

The access network device and/or the terminal may be fixed, or may be movable. The access network device and/or the terminal may be deployed terrestrially, including an indoor device or an outdoor device, a handheld device, or a vehicle-mounted device; or may be deployed on the water; or may be deployed on an airplane, a balloon, and a satellite in the air. An application scenario of the access network device and the terminal is not limited in embodiments of this application. The access network device and the terminal device may be deployed in a same scenario or different scenarios. For example, the access network device and the terminal device are both deployed on the land; or the access network device is deployed on the land, and the terminal device is deployed on the water. Examples are not provided one by one.

In embodiments of this application, each element in the communication system may be considered as a network element in the communication system. For example, a helicopter or an uncrewed aerial vehicle (the terminal 120i) in FIG. 1 may be configured as a mobile access network device. For the terminal device 120j that accesses the radio access network 100 through the terminal 120i, the terminal 120i is an access network device. However, for the access network device 110a, the terminal 120i is a terminal device. In other words, the access network device 110a communicates with the terminal 120i by using a radio air interface protocol. The access network device 110a and the terminal 120i may alternatively communicate with each other by using an interface protocol between access network devices. In this case, compared with the access network device 110a, the terminal 120i is also an access network device. Therefore, both the access network device and the terminal device may be collectively referred to as a communication apparatus. The access network device 110a and the access network device 110b in FIG. 1 may be referred to as communication apparatuses having functions of the access network device, and the terminal 120a to the terminal 120j in FIG. 1 may be referred to as communication apparatuses having functions of the terminal device.

In embodiments of this application, the communication apparatus having the function of the access network device may be an access network device, a module (for example, a chip, a chip system, or a software module) in the access network device, or a control subsystem including the function of the access network device. For example, the control subsystem including the function of the access network device may be a control center in a scenario in which a terminal may be used, like a smart grid, industrial control, smart transportation, or a smart city.

In embodiments of this application, a communication apparatus having a terminal function may be a terminal, or a module (like a chip, a chip system, a modem, or a software model) in the terminal, or an apparatus including the terminal function. In embodiments of this application, for ease of description, the base station or the BS and the terminal or the UE are used as an example for description below.

Communication between the access network device and the terminal device may comply with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a medium access control (media access control, MAC) layer, a physical (physical, PHY) layer, or the like. For example, the user plane protocol layer structure may include at least one of the following: a service data adaptation protocol (service data adaptation protocol, SDAP) layer, a PDCP layer, an RLC layer, a MAC layer, a physical layer, or the like.

The access network device may include a central unit (central unit, CU) and a distributed unit (distributed unit, DU). This design may be referred to as CU and DU separation. A plurality of DUs may be controlled by one CU in a centralized manner. For example, an interface between the CU and the DU is referred to as an F1 interface. A control plane (control plane, CP) interface may be F1-C, and a user plane (user plane, UP) interface may be F1-U. A specific name of each interface is not limited in embodiments of this application. The CU and the DU may be divided based on protocol layers of a wireless network. For example, functions of a PDCP layer and protocol layers (such as an RRC layer and an SDAP layer) above the PDCP layer are set on the CU, and functions of protocol layers (such as an RLC layer, a MAC layer, and a PHY layer) below the PDCP layer are set on the DU. For another example, functions of protocol layers above a PDCP layer are set on the CU, and functions of the PDCP layer and protocol layers below the PDCP layer are set on the DU. This is not limited.

The division into processing functions of the CU and the DU based on protocol layers is merely an example, and may be another division manner. For example, the CU or the DU may have functions of more protocol layers through division. For another example, the CU or the DU may have some processing functions of the protocol layers through division. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may alternatively be performed based on service types or other system requirements. For example, division may be performed based on delays. Functions whose processing time needs to satisfy a delay requirement are set on the DU, and functions whose processing time does not need to satisfy the delay requirement are set on the CU.

Optionally, the CU may have one or more functions of the core network.

Optionally, a radio unit (radio unit, RU) of the DU may be disposed remotely. The RU has a radio frequency function. For example, the DU and the RU may be set at the PHY layer through division. For example, the DU may implement higher-layer functions of the PHY layer, and the RU may implement lower-layer functions of the PHY layer. When sending is performed, functions of the PHY layer may include at least one of the following: adding a cyclic redundancy check (cyclic redundancy check, CRC) bit, channel encoding, rate matching, scrambling, modulation, layer mapping, precoding, resource mapping, physical antenna mapping, or radio frequency sending. When receiving is performed, functions of the PHY layer may include at least one of the following: CRC check, channel decoding, rate de-matching, descrambling, demodulation, layer demapping, channel detection, resource demapping, physical antenna demapping, or a radio frequency receiving function. The higher-layer functions of the PHY layer may include a part of functions of the PHY layer. For example, the part of functions are closer to the MAC layer. The lower-layer functions of the PHY layer may include another part of functions of the PHY layer. For example, the part of functions are closer to a radio frequency function. For example, the higher-layer functions of the PHY layer may include adding a CRC bit, channel encoding, rate matching, scrambling, modulation, and layer mapping, and the lower-layer functions of the PHY layer may include precoding, resource mapping, physical antenna mapping, and radio frequency sending functions. Alternatively, the higher-layer functions of the PHY layer may include adding a CRC bit, channel encoding, rate matching, scrambling, modulation, layer mapping, and precoding, and the lower-layer functions of the PHY layer may include resource mapping, physical antenna mapping, and radio frequency sending functions. For example, the higher-layer functions of the PHY layer may include CRC check, channel decoding, de-rate matching, decoding, demodulation, and layer de-mapping, and the lower-layer functions of the PHY layer may include channel detection, resource de-mapping, physical antenna de-mapping, and the radio frequency receiving function. Alternatively, the higher-layer functions of the PHY layer may include CRC check, channel decoding, de-rate matching, decoding, demodulation, layer de-mapping, and channel detection, and the lower-layer functions of the PHY layer may include resource de-mapping, physical antenna de-mapping, and the radio frequency receiving function.

Optionally, the functions of the CU may be further divided, and a control plane and a user plane are split and implemented by using different entities. Split entities are a control plane CU entity (namely, a CU-CP entity) and a user plane CU entity (namely, a CU-UP entity). The CU-CP entity and the CU-UP entity may be separately connected to the DU. In embodiments of this application, the entity may be understood as a module or a unit, and may exist in a form of a hardware structure, a software module, or a combination of the hardware structure and the software module. This is not limited.

Optionally, any one of the CU, the CU-CP, the CU-UP, the DU, and the RU may be a software module, a hardware structure, or a combination of the software module and the hardware structure. This is not limited. Different entities may have a same existence form or may have different existence forms. For example, the CU, the CU-CP, the CU-UP, and the DU are software modules, and the RU is a hardware structure. For brevity of description, all possible combination forms are not enumerated herein. These modules and methods performed by these modules also fall within the protection scope of embodiments of this application. For example, when the method in embodiments of this application is performed by the access network device, the method may be specifically performed by at least one of the CU, the CU-CP, the CU-UP, or the DU.

The following briefly describes terms used in this application.

With development of communication technologies, transmission bandwidth of a network increases sharply, transmission channels of a base station increase sharply, and a larger peak to average power ratio (peak to average power ratio, PAPR) further reduces efficiency of a power amplifier (PA). All these cause a sharp increase in power consumption of the base station. For example, because a deployment frequency band of a 5G network increases, a coverage area of the 5G network decreases, and more densely deployed base stations further increase overall power consumption of the 5G network. FIG. 2 is a diagram of power consumption of a typical station according to an embodiment of this application. It can be learned from FIG. 2 that, power consumption of a remote radio unit (remote radio unit, RRU) acting on a 900 MHz frequency band is 900 W, power consumption of an RRU acting on a 1.8 GHz frequency band is 900 W, power consumption of an RRU acting on a 1.8 GHz frequency band is 1390 W, power consumption of a building baseband unit (building baseband unit, BBU) 39x0 is 300 MHz, power consumption of an RRU acting on a 2.6 GHz frequency band is 1980 W, power consumption of an (active antenna unit, AAU) acting on a 4.9 GHz frequency band is 4200 W, and power consumption of a BBU5900 is 500 W. Therefore, power consumption of a single base station supporting 2G and 3G is 4808 W, power consumption of a single base station supporting 2G, 3G, and 4G is 6877 W, and power consumption of a single base station supporting 2G, 3G, 4G, and 5G is 11577 W. It can be learned from FIG. 2 that the power consumption of the single base station that can support the 4G network is 43% higher than that of the single base station that supports only the 2G and 3G networks, and the power consumption of the single base station that can support the 5G network is 68% higher than that of the single base station that supports only the 2G, 3G, and 4G networks. Power consumption of a single 5G base station is generally two to three times that of a typical 4G base station. Such high energy consumption is not conducive to environmental protection and sustainable development, and also causes huge electricity costs. For operators, energy consumption accounts for 23% of the overall operation expense. Therefore, it is particularly important to study a green and energy-saving communication technology.

To implement energy saving, a possible manner is to introduce a discontinuous transmission/discontinuous reception (DTX/DRX) mechanism. Specifically, a DTX/DRX configuration includes a cycle of active time (active time) and inactive time (inactive time). Within the inactive time in the cycle, a terminal device or a network device does not receive/does not send some signals, to implement energy saving. Within the active time in the cycle, the terminal device may receive/send the signals/channels. In this application, the energy saving technology is referred to as DTX/DRX, or is referred to as DTX for short. Optionally, configuration may be performed at a granularity of a cell (cell), that is, DTX takes effect for all terminal devices in a first cell. In other words, the network device indicates DTX to all users in the first cell by using first indication information, or indicates DTX of all the users in the first cell.

Optionally, the network device may send a plurality of types of DTX to the terminal device by using RRC signaling, and enable (or activate) one of a plurality of DTX configurations in one cell by using downlink control information (downlink control information, DCI) or a MAC control element (control element, CE).

It should be noted that, in this application, cell DTX/DRX or DRX is an abbreviation of the foregoing energy saving technology. For example, the foregoing energy saving technology may also be referred to as an energy saving mode 1, an energy saving configuration 1, or the like. A name of the energy saving technology is not limited in this application.

The DTX configuration may include one or more of the following information: a cycle length, start time, close time, start duration, close duration, or the like. The start time is a start moment of an active time period in a DTX cycle, the close time is a start moment of an inactive time period in the cell DTX/DRX cycle, the start duration is duration of the active time period, and the close duration is duration of the inactive time period.

When a DTX mechanism is configured, a relationship between a DTX design and BFR needs to be considered. Therefore, this application provides a communication method and apparatus, a storage medium, and a chip system. The network device sends first indication information to the terminal device, where the first indication information indicates a first DTX configuration, and the first DTX configuration includes that the terminal device is in an inactive state within a first time period in a first cell (that is, the terminal device does not transmit a first channel in the first cell within the first time period). After the terminal device detects a beam failure in the first cell, the terminal device performs beam failure recovery BFR within the first time period. The first cell may be a special cell (special cell, SpCell) or a secondary cell (secondary cell, SCell). Therefore, when the first DTX configuration is configured, the terminal device may perform a BFR process when being in the inactive state in the first DTX configuration in the SpCell. Alternatively, the terminal device may perform a BFR process when being in the inactive state in the first DTX configuration in the SCell.

To make the objectives, technical solutions, and advantages of this application clearer, the following further describes this application in detail with reference to the accompanying drawings. A specific operation method in a method embodiment may also be applied to an apparatus embodiment or a system embodiment.

First, some terms in embodiments of this application are described, to help a person skilled in the art have a better understanding.

### (1) Multi-cell transmission

A cell is a logical entity. Each cell has a cell ID. One cell may include a downlink carrier and/or an uplink carrier. A terminal may access the cell, and transmit uplink information on the uplink carrier of the cell, and/or transmit downlink information on the downlink carrier of the cell. The terminal may communicate with a plurality of access network devices, and the plurality of access network devices may serve different cells. For example, dual connectivity (dual connectivity, DC) and carrier aggregation (carrier aggregation, CA) are used as an example for brief description.

In an implementation of the DC, the terminal has communication connections to two access network devices, and can receive and send data. One of the two access network devices (for example, base stations) may be responsible for exchanging a radio resource control message with the terminal, and responsible for interacting with a core network control plane entity. In this case, the access network device may be referred to as a master node (master node, MN). For example, the master node may be an MeNB or an MgNB, but is not limited thereto. The other access network device may be referred to as a secondary node (secondary node, SN). For example, the secondary node may be an SeNB or an SgNB, but is not limited thereto. The master node is a control plane anchor. To be specific, the terminal sets up an RRC connection to the master node, and the master node sets up a control plane connection to a core network. In the DC, a plurality of serving cells in the master node form a master cell group (master cell group, MCG), including one primary cell (primary cell, PCell) and optionally, one or more secondary cells (secondary cells, SCells). A plurality of serving cells in the secondary node form a secondary cell group (secondary cell group, SCG), including one primary secondary cell (primary secondary cell, PSCell) and optionally, one or more SCells. The serving cell is a cell configured by a network for the terminal to perform uplink and downlink transmission.

In an implementation of the CA, to efficiently use a fragmented spectrum, a communication system may support aggregation between different carrier units, and aggregate two or more carriers to support a higher transmission bandwidth. In a CA technology, the terminal may be configured with a plurality of carrier units (component carrier, CC, or referred to as a member carrier, a component carrier, a carrier, or the like), and each CC may correspond to an independent cell. Therefore, one CC may also be equivalent to one cell. For example, a primary cell PCell corresponds to a primary CC (or referred to as a primary carrier), and may be a cell for setting up an initial connection for the terminal, a cell for re-setting up an RRC connection, or a primary cell specified in a handover (handover) process. A secondary cell SCell corresponds to a secondary CC (or referred to as a secondary carrier), and may be a cell that is added during RRC reconfiguration and that is used to provide additional radio resources. For the terminal in a connected state, if the carrier aggregation is not configured, the terminal has one serving cell; or if the carrier aggregation is configured, the terminal may have a plurality of serving cells (serving cells), which may be referred to as a serving cell set. For example, the serving cell (serving cell) set of the terminal includes the primary cell and the secondary cell. In other words, in a scenario in which the carrier aggregation is configured, the serving cell set includes at least one primary cell and at least one secondary cell. In other words, the terminal for which the carrier aggregation is configured may perform data transmission with one PCell and a plurality of SCells.

In a communication system, both a DC technology and the CA technology may be used. In the DC technology, the PCell and the PsCell each may be referred to as a special cell (special cell, SpCell). In the CA technology, the PCell may be referred to as an SpCell. In other words, for the terminal, the serving cell includes all SpCells and all SCells.

### (2) Beam (beam)

In a communication system, a high-frequency band is used for communication transmission. A main problem of the high-frequency communication is that signal energy sharply decreases as a transmission distance increases, and this results in a short signal transmission distance. To overcome this problem, a beamforming technology is used in the high-frequency communication, and a large-scale antenna array is used for weighted processing, so that signal energy is concentrated in a small range, to form a signal similar to a light beam (the signal is referred to as a beam), thereby extending a transmission distance.

The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, a hybrid beamforming technology, or the like. Different beams may be considered as different resources. Same information or different information may be sent by different beams. Optionally, a plurality of beams having a same or similar communication feature may be considered as one beam.

Beams include a transmission beam (which may also be referred to as a transmitted beam) and a reception beam. The transmission beam may indicate distribution of signal strength formed in different directions in space after a signal is transmitted by using an antenna, and the reception beam may indicate distribution that an antenna array enhances or weakens reception of a radio signal in different directions in space.

The beam may be understood as a spatial filter (spatial filter) or a spatial parameter (spatial parameter). A beam for sending a signal may be referred to as a transmission beam (transmission beam, namely, a Tx beam), a spatial domain transmit filter (spatial domain transmit filter), or a spatial domain transmit parameter (spatial domain transmit parameter). A beam for receiving a signal may be referred to as a reception beam (reception beam, namely, an Rx beam), a spatial domain receive filter (spatial domain receive filter), or a spatial domain receive parameter (spatial domain receive parameter).

### (3) Radio resource control (radio resource control, RRC) status

An RRC status of a terminal device (UE) includes a connected (RRC_CONNECTED) state, an idle (RRC_IDLE) state, and an inactive (RRC_INACTIVE, or referred to as a third state) state. The RRC inactive (inactive) state is a state newly introduced when a terminal is connected to a 5G core network by a base station, and the state is between the connected state and the idle state.

In the RRC_INACTIVE state, there is no RRC connection between the terminal and an access network device, but a connection between the access network device and a core network device is maintained, and the terminal stores all or some information needed for setting up/resuming a connection. Therefore, in the RRC_INACTIVE state, when the terminal needs to set up the connection, the terminal may quickly set up or resume the RRC connection to the access network device based on the stored related information.

### (4) Radio network temporary identifier (radio network temporary identifier, RNTI)

The RNTI is used to distinguish or identify a terminal apparatus connected to a cell, a specific radio channel, a group of terminal apparatuses in a paging case, a group of terminal apparatuses that receive a power control parameter, and system information sent by a network apparatus to all terminal apparatuses. The RNTI may be a 16-bit identifier whose value depends on a type of the RNTI. The RNTI used for paging (paging) is denoted as a P-RNTI. In addition, there are a cell radio network temporary identifier (cell radio network temporary identifier, C-RNTI) used for data scheduling, a modulation and coding scheme cell radio network temporary identifier (modulation and coding scheme cell radio network temporary identifier, MCS-C-RNTI), a configured scheduling radio network temporary identifier (configured scheduling radio network temporary identifier, CS-RNTI), and the like.

(5) Reference signal (Reference Signal, RS) is a known signal that is provided by a transmit end to a receive end and that is used for channel estimation or channel sounding. In this application, the reference signal may be used for channel measurement, interference measurement, and the like, for example, measurement for a CSI-related parameter.

(6) Reference signal resource may include at least one of resources of the reference signal, for example, a time domain resource, a frequency domain resource, an antenna port, a power resource, and a scrambling code. The network device may send the reference signal based on the reference signal resource, and the terminal device may receive the reference signal based on the reference signal resource. The reference signal in this application may be a channel state information reference signal (channel state information reference signal, CSI-RS), or a synchronization signal and physical broadcast channel block (synchronization signal and physical broadcast channel block, SSB). Correspondingly, the reference signal resource may be a CSI-RS resource or an SSB resource.

### (7) Beam failure recovery configuration

BFR is a process in which when a beam failure occurs in a cell, a terminal device in an RRC_CONNECTED state reports beam failure detection and a candidate new beam to a network device, to re-establish a beam connection.

Specifically, the network device may configure reference signal resources used for the beam failure detection. When detecting that these reference signal resources meet a condition of a beam failure instance, that is, beam quality corresponding to these reference signal resources is worse than a threshold threshold #1, a physical layer of the terminal device sends a beam failure instance indication to a higher layer of the terminal device. If there are N consecutive beam failure instance indications, the higher layer of the terminal device announces that the beam failure occurs, where N is a positive integer. It should be understood that a specific parameter of the threshold #1 is not limited in this application. For example, the threshold #1 may be a reference channel received power (reference signal received power, RSRP). In this case, if an RSRP corresponding to a reference signal resource is less than or equal to the threshold #1, the physical layer of the terminal device sends a beam failure instance indication to the higher layer of the terminal device. The higher layer may be a MAC layer. However, this is not limited in this application.

The network device may configure, for the terminal device, reference signal resources, that is, candidate reference signal resources, or referred to as a candidate beam set, used to determine available beams (or referred to as candidate beams or new available beams). The terminal device detects whether there is a candidate reference signal resource whose beam quality is better than a threshold #2 in the candidate reference signal resource set, and if there is a candidate reference signal resource whose beam quality is better than the threshold #2, reports the candidate reference signal resource whose beam quality is better than the threshold #2 to the network device. It should be understood that a specific parameter of the threshold #2 is not limited in this application, and the threshold #2 may also be referred to as a Qin threshold. For example, the threshold #2 may be an assumed block bit error rate. In this case, that the beam quality is better than the threshold #2 may mean that the assumed block bit error rate is less than or equal to the threshold #2. For another example, the threshold #2 may be a layer 1 reference signal received power (L1-reference signal received power, L1-RSRP). In this case, that the beam quality is better than the threshold #2 may mean that measured beam quality is greater than or equal to the L1-RSRP.

The higher layer of the terminal device determines an available beam (denoted as q_new), and notifies the physical layer of the terminal device of a random access channel (random access channel, RACH) resource managed by the higher layer of the terminal device. The physical layer of the terminal device sends, on the RACH resource, a preamble sequence corresponding to the available beam, that is, a beam failure recovery request (beam failure recovery request, BFRQ), to implicitly notify the network device that the terminal device sends a beam failure in a cell in which the RACH resource is located, and the terminal device finds a new available beam (that is, a beam corresponding to a reference signal resource corresponding to the RACH resource).

After sending the beam failure recovery request, the terminal device monitors, by using the q_new, a dedicated control channel resource set and a search space corresponding to the dedicated control channel resource set, to obtain a response of the network device to the BFRQ. The response of the network device to the BFRQ is a downlink physical control channel (PDCCH). In other words, if the terminal device receives the PDCCH in the search space corresponding to the dedicated control channel resource set, the beam failure recovery succeeds.

A reference signal for BFR (BFR reference signal, BFR-RS) may be obtained through higher layer configuration. For example, the configured BFR-RS may be an SSB or a CSI-RS. The BFR-RS may be configured at a granularity of a cell. For example, for an SpCell or an SCell, the BFR-RS may be separately configured in different RRC signaling. For the SCell without the SSB, the BFR-RS of the SCell may be configured as the CSI-RS.

### (8) DRX mechanism of the terminal device

The terminal device monitors a PDCCH to check whether there is DCI from a serving cell, to perform signal transmission with the network device. In many cases, the terminal device does not always perform effective information exchange with a network. In this case, if the terminal device continuously monitors the PDCCH, large power consumption is caused. To reduce power consumption of the terminal apparatus and ensure effective data transmission, a DRX mechanism is introduced in NR. The DRX mechanism may also be understood as a DRX mechanism of the terminal device. According to the DRX mechanism, the terminal device may periodically monitor the PDCCH within some time periods, and does not monitor the PDCCH within another time period. This implements energy saving of the terminal device. The DRX mechanism of the terminal device may also be referred to as a C-DRX mechanism.

Currently, a terminal device in an RRC_IDLE state or an RRC_INACTIVE state needs to perform a random access procedure to complete establishment of an RRC connection. It may be understood that four-step RA (4-step RA) is defined in NR R15, and two-step RA (2-step RA) is introduced in enhanced R16.

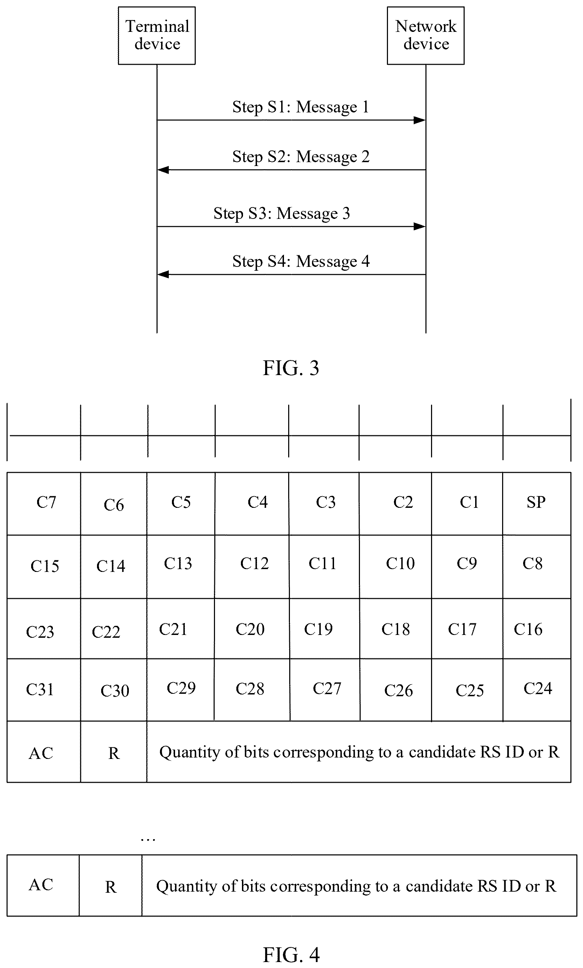

FIG. 3 is a schematic flowchart of a random access method according to this application. Specifically, a four-step RA process is used as an example.

Step S1: A terminal device sends a message 1 (Message 1, Msg1) to a network device, and the network device receives the message 1 from the terminal device. A channel for transmitting the message 1 may include a physical random access channel (physical random access channel, PRACH). After obtaining a RACH, the terminal device may send, on an indicated RACH time-frequency resource, a preamble (preamble) indicating the RACH. It should be noted that the PRACH and the RACH are not distinguished in this embodiment of this application.

For a RACH time-domain position and a RACH frequency-domain position, the RACH time-domain is indicated by a RACH configuration (Config) in a SIB 1. A slot is used as a cycle for repetition. Each slot may have one or more RACH occasions (RACH occasions, ROs). One RACH occasion may be understood as one RACH time-frequency resource, and both a start symbol and a length of the RACH occasion are configured by a higher layer. A maximum of eight RACH frequency-domain positions are available, and an RB occupied by each position is configured by the higher layer.

All of a RACH occasion selected by the terminal device, a preamble to be sent by the terminal device, and a spatial filtering setting (for example, a transmission beam) to be sampled by the terminal device need to be determined based on a measurement result of an SSB index. An SSB-RACH association defines a case in which there is a mapping relationship between an SSB and an RO or a preamble, and the mapping relationship may be one-to-many, one-to-one, or many-to-one. Specifically, the terminal device determines active SSB indexes, that is, actually sent SSB indexes, based on ssb-PositioninBurst in the SIB 1. Then, the active SSB indexes are sorted in ascending order, RACH occasions are sorted in a frequency-first-time-second order, and the active SSB indexes and the RACH occasions are associated one by one based on the specified relationship. There are two cases for the SSB-RACH association.

Case 1: One SSB index is associated with N≥1 RACH occasions.

Case 2: A plurality of SSB indexes are associated with one RACH occasion, but are associated with different preamble index sets in the occasion.

The terminal device may measure an RSRP of an SSB sent by the network device. When a measurement result of an RSRP of an SSB is greater than or equal to an SSB index of a preset threshold, the terminal device determines, based on an RO to which the SSB is mapped, a RACH occasion or a preamble set (preamble index set) that can be selected. If there are a plurality of RACH occasions and preamble index sets and there is no other selection criterion (if a selection criterion is configured, a preamble may be selected based on a size of an Msg3), the terminal device randomly selects a RACH occasion and a preamble from the plurality of RACH occasions and preamble index sets, and sends the Msg1 based on a spatial filtering setting used when a corresponding SSB index is received. In other words, in an existing solution, RACH sending and spatial filtering are associated with the SSB. It should be noted that the Msg1 can be sent only on an uplink channel, and time domain positions at which uplink channels are located are determined based on a time division duplexing (time division duplexing, TDD) frame structure in a PCell configuration.

Step S2: The network device sends a message 2 (Msg2) to the terminal device, and the terminal device receives the message 2 from the network device.

The message 2 is a response to the Msg1, and may be referred to as a random access response (random access response, RAR). After sending the Msg1, the terminal device monitors, in a specified time domain window, DCI scrambled by a random access-radio network temporary identifier (Random Access RNTI, RA-RNTI). If a UE detects DCI scrambled by an RA-RNTI of the UE, the UE receives a PDSCH scheduled by using the DCI. A medium access control (media access control, MAC) protocol data unit (protocol data unit, PDU) carried on the PDSCH includes a plurality of sub (sub)-PDUs. Each sub-PDU includes one MAC header (header) to indicate one preamble index, and includes one MAC RAR, that is, uplink scheduling information of a UE that sends the preamble index.

The RAR has one or more of the following main functions: first, sending an initial uplink transmission timing advance (Timing Advance, TA) to help the UE complete uplink timing synchronization; second, sending a temporary cell-radio network temporary identifier (Temporary C-RNTI, TC-RNTI) to replace a C-RNTI for use by the UE before initial access is completed; and third, sending an uplink grant (RAR UL grant) to schedule a PUSCH to carry a subsequent Msg3 for sending.

Step S3: The terminal device sends a message 3 (Msg3) to the network device, and the network device receives the message 3 from the terminal device. If the UE receives the RAR, the UE sends an Msg3 on the scheduled PUSCH based on the TA indicated by the RAR. Data on the PUSCH is scrambled by the TC-RNTI at a physical layer, and content of the data includes an ID of the UE. It should be noted that time-frequency resource indication information of the PUSCH carrying the Msg3 is carried in the RAR.

Step S4: The network device sends a message 4 (Msg4) to the terminal device, and the terminal device receives the message 4 from the network device.

After sending the Msg3, the UE monitors, in a corresponding time window, DCI scrambled by the TC-RNTI. If the DCI is detected, the UE receives a corresponding PDSCH. The PDSCH includes a contention resolution identifier (UE contention resolution Identifier). If the identifier matches the ID of the UE, it indicates that contention resolution succeeds, and the UE changes the TC-RNTI to the C-RNTI.

If the UE obtains, through parsing, the DCI scrambled by the TC-RNTI, the UE needs to feed back an ACK/NACK regardless of whether PDSCH decoding succeeds or fails, and a physical uplink control channel (physical uplink control channel, PUCCH) resource for feeding back the ACK/NACK is also indicated by the DCI.

In the two-step RA, the terminal device sends a message A (MsgA) to the network device, and the network device receives the message A from the terminal device.

A transmission channel of the MsgA may include a physical random access channel (physical random access channel, PRACH) and a physical uplink shared channel (physical uplink shared channel, PUSCH). The PRACH is used to send a preamble, used by the network device to estimate a timing advance of the terminal device, so that the terminal device implements uplink synchronization with the network device. The terminal device may further send uplink data (for example, small packet data) through the PUSCH of the MsgA. In other words, the PUSCH may be used to carry the uplink data.

The terminal device returns a message B (MsgB) to the terminal, and the terminal device receives the message B from the network device.

Downlink data may be included in the MsgB. Early transmitted downlink data may be transmitted through a physical downlink shared channel PDSCH of the MsgB.

The following describes a specific configuration of BFR. The network device configures a beam failure recovery configuration (BeamFailureRecoveryConfig) for the terminal device by using RRC signaling, where the beam failure recovery configuration includes a beam failure recovery related parameter of a cell. For BFR of an SpCell, specific parameters are described as follows:

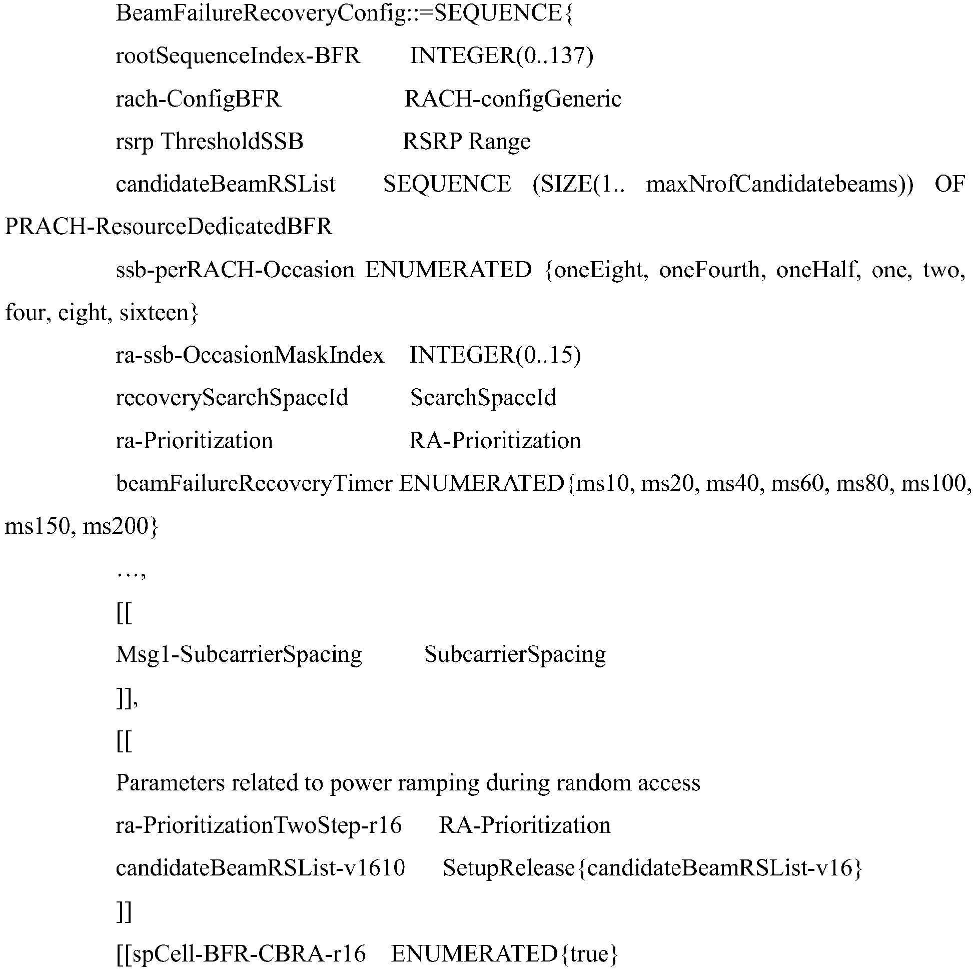

For an SCell, specific parameters are described as follows:

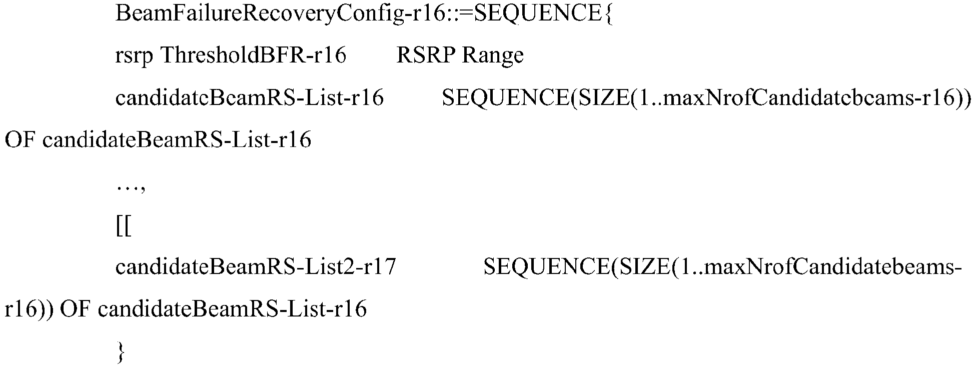

An existing protocol does not specify a time sequence of a BFR-RS measurement process. To be specific, a configured BFR-RS may be measured during beam failure detection (beam failure detection, BFD), and a beam that meets a requirement is pre-selected, or a BFR-RS may be measured after a beam failure occurs.

For the SpCell, a measurement threshold in a BFR process is determined by a field rsrp-ThresholdSSB in RRC signaling of the SpCell. For the SCell, a measurement threshold in a BFR process is determined by a field rsrp-ThresholdSSB in RRC signaling of the SCell. Based on the field configuration and a preset transmission parameter, the terminal device may respectively determine Qin thresholds (for example, L1-RSRPs) for the SpCell and the SCell. If a measurement result of a BFR-RS is greater than a corresponding threshold, an index (index) corresponding to the BFR-RS is included when a BFRQ is reported.

Next, the BFR process of the SpCell is described. A configuration field of BFR of the SpCell mainly includes the following related fields:
a root sequence index of the BFR (rootSequenceIndex-BFR);
an SSB associated with a physical random access channel (physical random access channel, PRACH) transmission occasion (ra-ssb-OccasionMaskIndex);
a random access channel configured for the BFR (rach-ConfigBFR);
an SSB configured for and mapped to each RACH occasion (ssb-perRACH-Occasion); and
a search space identifier used for monitoring a response to a beam failure recovery request (recoverySearchSpaceId).

The foregoing fields are used to configure a transmission occasion of a RACH associated with a BFR-RS, a used preamble, and a search space corresponding to a PDCCH for receiving a BFR random access response (random access response, RAR).

The configuration field further includes the following related fields:
ra-Prioritization, ra-PrioritizationTwoStep-r16: a power ramping related parameter during random access; and
beamFailureRecoveryTimer: a timer used for contention-free random access (contention-free random access, CFRA) of the BFR.

Based on the foregoing, based on configurations for a RACH resource corresponding to a BFR-RS and a PDCCH search space corresponding to the RACH resource, BFR needs to be performed in the SpCell, and when a measurement result of a configured BFR-RS is greater than the foregoing threshold, the terminal device may first initiate CFRA to perform BFR. A specific procedure is as follows:
Step 1: The terminal device sends a RACH in the SpCell based on a RACH resource corresponding to a BFR-RS.

Specifically, when preparing to perform BFR of the SpCell, the terminal device starts a beamFailureRecoveryTimer; or after sending the RACH, the terminal device starts an ra-Response Window.

Step 2: The terminal device detects, in a search space corresponding to the RACH, a PDCCH scrambled by a C-RNTI, and receives a corresponding BFR RAR based on the PDCCH. When the RAR is successfully received, or when the RAR is successfully received and an automatic repeat request-acknowledgement (hybrid automatic repeat request-acknowledgement, HARQ-ACK) corresponding to the RAR is sent, it is considered that the BFR of the SpCell succeeds.

In the foregoing process, if the SpCell is a PSCell and an SCG deactivation indication is received, it is considered that the BFR succeeds, and the corresponding beamFailureRecoveryTimer and ra-ResponseWindow stop.

When the beamFailureRecoveryTimer expires and the terminal device does not complete the BFR process, or when all measurement results of a BFR-RS configured by the terminal device reach the Qin threshold, the terminal device completes the BFR of the SpCell based on a contention-based random access (contention-based random access, CBRA) process.

Specifically, if the SpCell is configured to support a two-step RACH, CBRA of the two-step RACH is performed; otherwise, CBRA of a four-step RACH is performed. During the CBRA, the terminal device may perform, in the SpCell, measurement based on an SSB that is normally delivered by a network for random access, and select a RACH transmission occasion (RACH Occasion, RO) corresponding to an SSB that meets a performance requirement, to perform random access.

Next, the BFR process of the SCell is described.

No PRACH resource is reserved in the SCell, and an SSB may not be configured in the SCell. Therefore, BFR of the SCell needs to be performed based on a MAC CE used for the BFR, and the MAC CE is carried on a PUSCH.

FIG. 4 is a diagram of a format of a MAC CE for beam failure recovery according to an embodiment of this application. The MAC CE includes the following fields:
SP: The field mainly indicates, to the terminal device, whether BFD occurs in the SpCell. For example, SP=1 indicates that the BFD occurs in the SpCell. Therefore, the MAC CE used for the BFR or a truncated Truncated MAC CE used for the BFR is used as a part of a random access procedure in a form of a MAC layer protocol data unit (protocol data unit, PDU), that is, is included in a message A (message A, Msg A) and/or a random access message 3 (message 3, Msg 3). SP=0 indicate that the BFD may occur in the SCell.

AC: The field indicates that a candidate reference signal index candidate RS ID exists in an octet. If a measurement result of at least one BFR-RS meets a threshold, it indicates that a candidate beam can be found, AC=1, and the candidate RS ID field corresponds to a BFR-RS index (index). If no candidate beam is found, AC=0, and all bits (bits) corresponding to the candidate RS ID field are set to 0.

Candidate RS ID: The field indicates an index of a specific corresponding BFR-RS.

Ci: The field indicates that BFD occurs in a cell. Each bit corresponds to one cell. As shown in FIG. 3, bits may correspond to 31 cells. For example, a bit corresponds to a cell by using an index (index, id) of the cell, and a cell whose index is 1 corresponds to C1. Ci=1 indicates that BFD has occurred in a corresponding SCell and evaluation of a BFR-RS has been completed. The field includes an AC field of the corresponding SCell. Ci=0 indicates that BFD does not occur in a corresponding SCell, or BFD occurs but evaluation of a BFR-RS is not completed. The field does not include a corresponding AC field. The AC field appears in ascending order of serving cell indexes. For example, if ids of SCells in which BFD occurs are 1, 3, and 4, a 1^{st} bit of the AC field corresponds to an SCell 1, and so on.

Specifically, the terminal device may send, in the SCell, the MAC CE used for the BFR, or may send, in the SpCell, the MAC CE used for the BFR. Further, when the MsgA and/or the Msg3 are/is sent in a process of performing CBRA in the SpCell, the MAC CE used for the BFR may also be included in the MsgA and/or the Msg3. If a current uplink resource cannot carry a complete MAC CE used for the BFR, but can carry a truncated MAC CE used for the BFR (the truncated MAC CE used for the BFR includes at least an SP field and a Ci field, that is, has at least a function of notifying the SpCell and/or the SCell that BFD occurs), the truncated MAC CE used for the BFR is sent.

If there is no available uplink resource currently or an uplink resource cannot carry the truncated MAC CE used for the BFR, the terminal device needs to send a scheduling request (Scheduling Request, SR) to request a network side to allocate an uplink resource. In parameters included in a configuration of the SR, a parameter "schedullingRequestID-BFR-SCell-r16 SchedulingRequestId" may indicate that the BFR process of the SCell is associated by using an SR_ID. It may also be understood as that the SR is an SR for performing BFR of the SCell.

After the terminal device sends a MAC CE used for the BFR, when the terminal device receives an uplink grant that is used to schedule initial transmission (new transmission) data and that uses a same HARQ process as the MAC CE used for the BFR, or when the terminal device receives a new transmission uplink grant that uses a same HARQ process as the MAC CE used for BFR and sends a PUSCH corresponding to the uplink grant, it is considered that the BFR of the SCell succeeds.

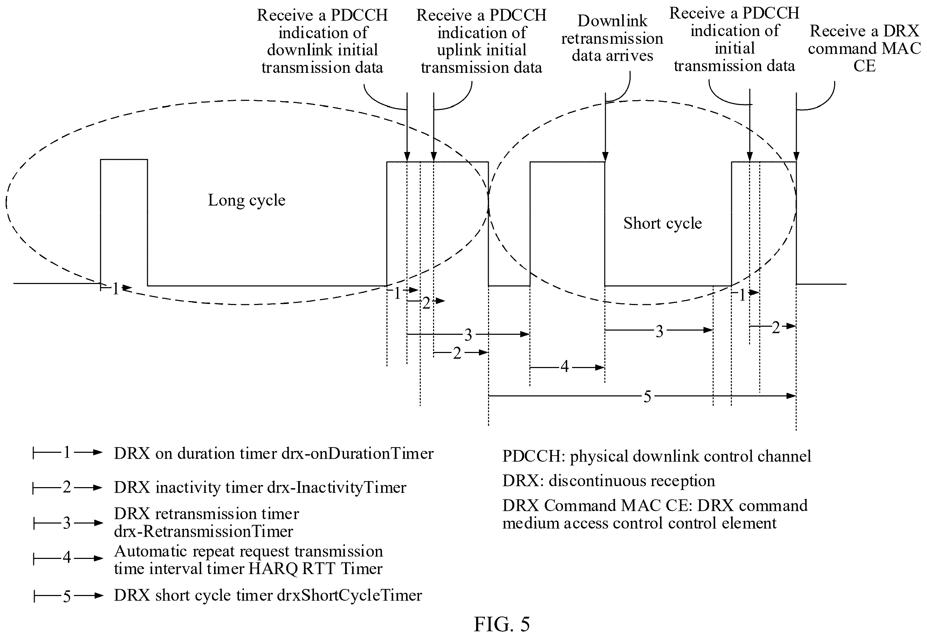

FIG. 5 is a diagram of C-DRX of a terminal device according to an embodiment of this application. As shown in FIG. 5, a C-DRX mechanism involves one or more of the following parameters: a DRX Cycle cycle, a DRX on duration timer drx-onDurationTimer, a DRX inactivity timer drx-InactivityTimer, a DRX downlink automatic repeat request transmission time interval timer drx-HARQ-RTT-TimerDL, a DRX downlink retransmission timer drx-RetransmissionTimerDL, a DRX uplink automatic repeat request transmission time interval timer drx-HARQ RTT TimerUL, a DRX uplink retransmission timer drx-RetransmissionTimerUL, a DRX short cycle timer drxShortCycleTimer, or a DRX command medium access control control element DRX Command MAC CE.

The DRX cycle is used to configure a discontinuous reception cycle, and in each cycle, the terminal device periodically receives data within a period of time. The DRX cycle includes a long cycle (Long DRX cycle) and a short cycle (Short DRX cycle). In a possible implementation, on duration of the long cycle is an integer multiple of the short cycle.

The drx-onDurationTimer is started at a start moment of each DRX cycle and is used to configure on duration starting from the start moment, and a unit may be millisecond (ms). The terminal device enters active time (active time) at a start moment of a start slot of a start subframe of each time window. When on duration (on Duration) ends, the terminal device enters inactive time (inactive time). The terminal device needs to monitor a PDCCH within the on duration. It should be noted that the active time may also be considered as an activated state, activated time, an active state, or active time, and the inactive time may also be considered as an inactivated state, inactivated time, an inactive state, or inactive time.

When the terminal device is configured with the C-DRX mechanism, when each DRX cycle arrives, the terminal device first enters the active time/the on duration, and starts the drx-onDurationTimer. After the DRX on duration timer expires, the terminal device enters the inactive time. If a PDCCH for scheduling data transmission is detected within the on duration, the terminal device starts or restarts the DRX inactivity timer (drx-InactivityTimer). When the DRX inactivity timer is running, the terminal device is in the active time.

The drx-HARQ RTT Timer-DL is used to configure a minimum downlink retransmission scheduling interval, and specifies a minimum quantity of downlink subframes after which next DL HARQ retransmission occurs. The timer is started in the following three cases. Case 1: Downlink initial transmission data occurs. Case 2: Downlink retransmission data occurs. Case 3:Downlink assignment is pre-configured.

The drx-RetransmissionTimerDL is used to configure waiting time for receiving downlink retransmission scheduling, and the timer indicates maximum time in which the terminal device waits for downlink retransmission data. When the HARQ RTT Timer expires, and corresponding downlink data is not correctly demodulated, the timer is started.

The drx-HARQ RTT Timer-UL is used to configure a minimum uplink retransmission scheduling interval, and specifies a minimum quantity of uplink subframes after which next UL HARQ retransmission occurs. This timer is started when uplink transmission is received.

The drx-RetransmissionTimerUL is used to configure waiting time for receiving uplink retransmission scheduling, and the timer indicates maximum time in which the terminal device waits for an uplink retransmission grant. When the HARQ RTT Timer UL expires, and a corresponding uplink grant is not correctly demodulated, the timer is started.

The drx-ShortCycleTimer parameter is used to configure a life cycle of the short cycle. After the timer expires, the long cycle needs to be used. When the DRX short cycle is configured, the timer is started or restarted in the following two cases. Case 1: The drx-Inactivity Timer expires. Case 2: The terminal device receives the DRX Command MAC CE.

The DRX Command MAC CE is MAC signaling for enabling the terminal device to immediately enter dormant time. The terminal device that receives the signaling immediately stops the on duration timer and the DRX Inactivity Timer.

In the C-DRX mechanism, the terminal device is in an active state in one or more of the following cases:
Case 1: The drx-onDurationTimer is started and the timer has not expired, the drx-InactivityTimer timer is started and the timer has not expired, the drx-RetransmissionTimerUL/DL timer is started and the timer has not expired, a contention resolution timer mac-ContentionResolutionTimer is started and the timer has not expired, or an MsgB-Response Window is started and the window has not expired.
Case 2: There is a scheduling request that is sent on a PUCCH and that is pending. In other words, the terminal device sends an SR, and the SR is in a pending state. Correspondingly, an SR transmission timer sr-ProhibitTimer on the PUCCH may be started. The timer is configured for each SR. When the timer is started, the terminal device cannot send a new SR.
Case 3: An uplink grant for HARQ retransmission may arrive, and there is data in a corresponding HARQ buffer.
Case 4: In contention-free random access CFRA, after a random access message 2 is successfully received, a PDCCH that is identified by a C-RNTI and that indicates new data transmission has not been received.
Case 5: Other time at which the terminal device is required to monitor a PDCCH in a protocol, for example, uplink semi-persistent scheduling time or downlink semi-persistent scheduling time, window time of a random access message 2, and system information is received.

Based on the foregoing descriptions of the C-DRX protocol, the applicant of this application further analyzes impact of the C-DRX on a BFR process. First, for a BFR-RS, that is, an SSB and a CSI-RS, the C-DRX does not act on the foregoing two reference signals. Therefore, the C-DRX does not affect sending of the BFR-RS and measurement of the BFR-RS by the terminal device.

The following describes the impact of the C-DRX on the BFR in terms of an SpCell and an SCell.

For BFR of the SpCell, in a CFRA process, it is defined in the C-DRX protocol that the C-DRX does not act on a PRACH. In addition, in the BFR process, it is specified that after a RACH corresponding to the BFR is sent, receiving of a PDCCH scrambled by a C-RNTI should be maintained. A corresponding part of the C-DRX protocol defines a case in which when a corresponding PDCCH needs to be detected in another process in the protocol, a definition of the another process in the protocol is complied with.

In the CBRA process, because the C-DRX is specific to a terminal in a connected state, a random access behavior is not affected. Specifically, the C-DRX does not act on the PRACH or a PUSCH, that is, does not affect uplink transmission. In addition, the C-DRX does not act on a PDCCH scrambled by an RA-RNTI/MsgB-RNTI (a format corresponding to a PDCCH for scheduling an Msg2/an MsgB, and when receiving the corresponding PDCCH, the terminal device may detect corresponding information in a corresponding time-frequency resource indicated by the corresponding PDCCH). Therefore, receiving of the Msg2/the MsgB is not affected. In addition, for an Msg4, that the C-DRX does not act on a PDCCH scrambled by a TC-RNTI is defined. In addition, that when a mac-ContentionResolutionTimer timer is started and the timer expires or when an MsgB-ResponseWindow is started and a width of the window expires, the terminal device is in an active state is defined. In other words, that the terminal device needs to remain in the active state for a period of time before receiving the Msg4 is defined.

For the BFR of the SpCell, the C-DRX does not act on a PUSCH. After the PUSCH is sent, a corresponding RTT and a retransmission timer are started. The terminal device remains active in the retransmission timer and waits for receiving a corresponding uplink grant. In addition, the DRX does not act on an SR. After the SR is sent, when the SR remains in a pending state, the terminal device remains in active time.

Based on the foregoing, in the C-DRX mechanism, the terminal device further has a large quantity of signal receiving and sending behaviors in an inactive period. Therefore, the terminal device may perform the BFR process in the SpCell or the SCell. Therefore, for a first DTX configuration, a BFR process of the terminal device needs to be defined.

It should be noted that the first DTX configuration provided in this embodiment of this application is different from the C-DRX mechanism of the terminal device. The DTX and the C-DRX are two different energy saving modes. In a possible understanding manner, the terminal device does not send or receive a first channel in a first cell in inactive time in the DTX, the terminal device does not send or receive a second channel in inactive time in C-DRX, and the first channel and the second channel are not completely the same. In another possible understanding manner, a cell DTX/DRX is an enhancement or a supplement to the C-DRX in the current communication protocol.

The following further describes in detail a communication method and a communication apparatus provided in embodiments of this application.

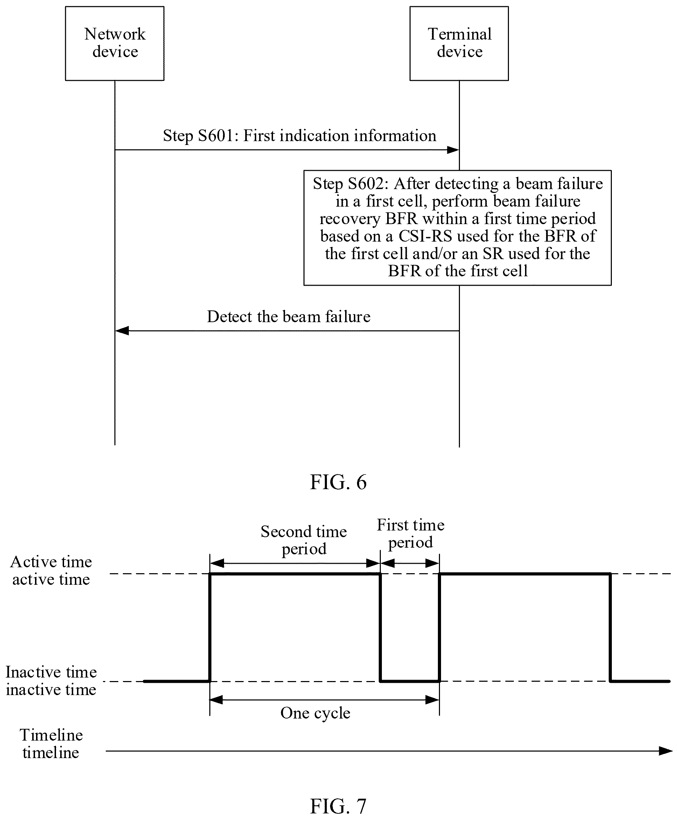

FIG. 6 is a schematic flowchart of a communication method according to an embodiment of this application. The schematic flowchart shown in FIG. 6 is described by using an example in which a network device and a terminal device interact with each other for execution. The network device may be a communication unit, a component, or a chip in the network device, or an apparatus that matches the network device. The terminal device may be a communication unit, a component, or a chip in the terminal device, or an apparatus that matches the terminal device. For related descriptions of the network device and the terminal device, refer to the foregoing content. Details are not described again.

The communication method shown in FIG. 6 includes step S601 and step S602. It should be understood that, in this application, for ease of description, execution time, a quantity of execution times, and the like of the one or more steps are not limited in this embodiment of this application.

Step S601: The network device sends first indication information to the terminal device.

Correspondingly, the terminal device may receive the first indication information from the network device. The first indication information indicates a first DTX configuration, the first DTX configuration includes that transmission of a first channel in a first cell is not allowed within a first time period, and the first channel does not include one or more of the following signals: a CSI-RS and an SR that are used for BFR of the first cell.

In a possible implementation, the first cell is an SpCell or an SCell. Therefore, the first indication information indicates that transmission of the first channel in the SpCell is not allowed within the first time period, or the first indication information indicates that transmission of the first channel in the SCell is not allowed within the first time period. Because the first channel does not include one or more of the CSI-RS and the SR that are used for the BFR of the first cell, further, the first indication information indicates that transmission in the SpCell is not allowed within the first time period not including that signal of CSI-RS is not included in the first channel, or the first indication information indicates that transmission of a signal that does not include the CSI-RS or the SR and that is on the first channel in the SpCell is not allowed within the first time period.

In a possible implementation, the first channel may include an uplink channel and/or a downlink channel.

In a possible implementation, a channel type of the first channel may include an uplink channel type, and the uplink channel type includes one or more of the following: a configured grant physical uplink shared channel CG PUSCH; a hybrid automatic repeat request feedback HARQ-ACK for a semi-persistent scheduling SPS PDSCH; a scheduling request SR; a physical random access channel PRACH; a random access message A; or a random access message 3.

In a possible implementation, a channel type of the first channel may include a downlink channel type, and the downlink channel type includes one or more of the following: a physical downlink control channel PDCCH scrambled by a modulation and coding scheme-cell radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal or physical broadcast channel block SSB, system information, a paging message, a random access message 2, a random access message 4, a random access message B, or a semi-persistent scheduling physical downlink shared channel SPS PDSCH.

In this embodiment of this application, that the network device and/or the terminal device are/is configured with the first DTX configuration may be understood as follows: The network device is configured with one or more of DTX mechanisms, and the terminal device is configured with one or more of the DTX mechanisms. For example, the terminal device may learn of (or be configured with) the first DTX configuration of the network device by receiving the first indication information. In embodiments of this application, the DTX mechanism configured for the network device and/or the terminal device is collectively referred to as the first DTX configuration. In this embodiment of this application, the first DTX configuration may include a cycle. In this embodiment of this application, one cycle in the first DTX configuration is used as an example for description. Duration of the cycle in the first DTX configuration may include active time and inactive time, and in the first DTX configuration, the active time and the inactive time may repeatedly appear in a unit of the duration of the cycle. The first time period may include one or more time units. For related descriptions of the time unit, refer to the foregoing content. Details are not described again.

In another possible implementation, the first indication information further indicates that transmission of the first channel in the first cell is allowed within a second time period. In this embodiment of this application, the first indication information may also be referred to as configuration information, for example, configuration information of the first DTX configuration of the terminal device. The second time period may be considered as a time period in one cycle in the first DTX configuration, for example, may be considered as a time period in active time or active time in one cycle in the first DTX configuration.

For example, the network device and/or the terminal device are/is configured with the first DTX configuration, the first time period and the second time period are two time periods in one cycle in the first DTX configuration, and the second time period is before the first time period. There is no intersection set of the second time period and the first time period in one cycle. In a possible implementation, a union set of the first time period and the second time period may be a universal set of one cycle in the first DTX configuration.

FIG. 7 is a diagram of a possible relationship between a first time period and a second time period according to an embodiment of this application. As shown in FIG. 7, one cycle shown in FIG. 7 may be one cycle in the first DTX configuration. In this case, the second time period may represent active time in the first DTX configuration, and the first time period may represent inactive time in the first DTX configuration. One cycle shown in FIG. 7 may alternatively be one cycle in the first DTX configuration. In this case, the second time period may represent active time in the first DTX configuration, and the first time period may represent inactive time in the first DTX configuration.

In a possible implementation, the first indication information includes one or more of the following: RRC signaling, a MAC CE, or DCI.

In an implementation, the first indication information may be unicast, multicast, or broadcast RRC signaling, and the RRC signaling indicates one or more of a first cycle, first start time, first close time, start duration, or close duration. The first start time is a start moment of a second time period in the first cycle, the first close time is a start moment of a first time period in the first cycle, the start duration is duration of the second time period, and the close duration is duration of the first time period. Configuring (activating) the first DTX configuration by using the RRC signaling is more direct and simpler.

In another implementation, the first indication information may be the MAC CE or the DCI. The MAC CE or the DCI may indicate that a time domain pattern in one cycle takes effect. The time domain pattern indicates active time in the first DTX configuration, for example, indicates that the first time period and the second time period in the first cycle take effect. It may be understood that before the terminal device receives the first indication information from the network device, the terminal device further receives first configuration information. The first configuration information includes configuration information of one or more cycles, and any one of the configuration information of the one or more cycles includes one or more of first start time, first close time, start duration, and close duration of one cycle. The first start time is a start moment of a second time period in the cycle, the first close time is a start moment of a first time period in the cycle, the start duration is duration of the second time period, and the close duration is duration of the first time period. The first time period is a time period in a first cycle, and the first cycle is one of the one or more cycles. The first indication information is used to activate a configuration for the first cycle in the first configuration information, so that the terminal device does not transmit the first channel in the first cell within the first time period.

Further, the MAC CE may be a unicast, multicast, or broadcast MAC CE. Further, the DCI may be unicast, multicast, or broadcast DCI.

In a possible implementation, when the first indication information is DCI, the DCI may further have one or more of the following designs:
Manner 1: The DCI includes DCI scrambled by a first RNTI, where the first RNTI is a newly added radio network temporary identifier. The first RNTI is obtained by designing an RNTI type different from that in an existing protocol, that is, the first RNTI is different from an RNTI in the existing protocol. Therefore, a PDCCH scrambled by the first RNTI does not belong to the PDCCH type included in the first channel. Further, the first RNTI may be designed for a specific terminal device (UE-specific), the first RNTI may be designed for a common group (group-common), or the first RNTI may be designed for a specific cell (cell-specific). For example, the network device sends the first indication information through the PDCCH scrambled by the first RNTI. Because the PDCCH scrambled by the first RNTI does not belong to the PDCCH type included in the first channel, the first channel may be transmitted in the first cell within the first time period.
Manner 2: The DCI includes DCI scrambled by a second RNTI, where the second RNTI is an existing identifier. In other words, the second RNTI exists in the existing protocol. For example, the DCI may be carried on a PDCCH scrambled by one of a C-RNTI, a CS-RNTI, an MCS-C-RNTI, an SP-CSI-RNTI, a PS-RNTI, a P-RNTI, and a PEI-RNTI. When the network device sends the first indication information in an existing DCI format, the first indication information includes a first indication field, and the first indicator field is used to identify the first indication information, or the first indication field is an identifier of the first indication information, so that the first indication field may indicate that the DCI is used to configure the first DTX configuration, and the first indication field may be set to all 0s or 1s, to distinguish an original function from a new function. For example, the network device sends the first indication information through the PDCCH scrambled by the second RNTI. If the first indication field included in the first indication information is set to all 0s or all 1s, it indicates that the PDCCH scrambled by the second RNTI indicates that the terminal device does not transmit the first channel in the first cell within the first time period. Otherwise, it indicates that the PDCCH scrambled by the second RNTI is used for another function, for example, data transmission scheduling, paging information transmission, and paging information indication.
Manner 3: One or more fields are added to a DCI format in the existing protocol, to obtain the DCI, where the added one or more fields are used to activate or deactivate the first DTX configuration, so that the terminal device does not transmit the first channel in the first cell within the first time period. In Manner 3, an additional quantity of times of blind detection may not be increased, and the original function of the existing DCI format is not affected.

In a possible implementation, the terminal device activates the first cycle based on the first indication information. To be specific, before the first indication information indicates that the first channel is not transmitted in the first cell within the first time period, the terminal device already has a cycle configuration of the first cycle. For example, before step S601, the network device sends second configuration information to the terminal device, where the second configuration information includes configuration information of one or more cycles of the terminal device in each of one or more cells, the first cell is one of the one or more cells, and the first cycle is one of one or more cycles of the first cell. The first cycle means that the terminal device does not transmit the first channel within the first time period. After receiving the first indication information, the terminal device may activate, based on the first indication information, the first cycle that is of the terminal device in the first cell and that is in the second configuration information, so that the terminal device does not transmit the first channel in the first cell within the first time period, where the first time period is a time period in the first cycle.

In a possible implementation, the first indication information may alternatively be used to activate one of one or more cycles corresponding to cells other than the first cell in the one or more cells. One or more cycles of different cells may be the same, or may be different. Cycles activated for different cells may be the same or may be different.

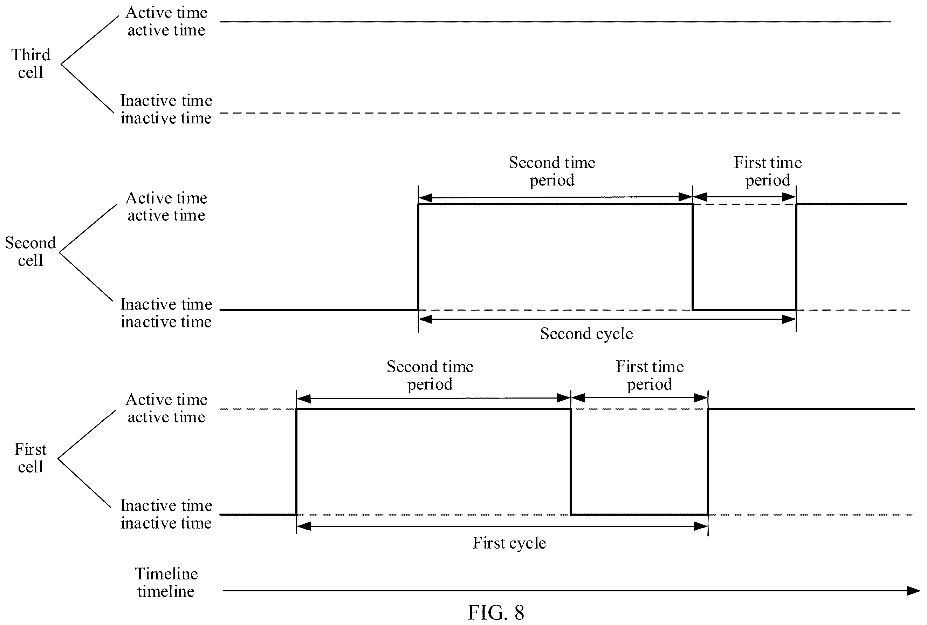

FIG. 8 is a diagram of separately configuring a first DTX configuration for different cells of a terminal device according to an embodiment of this application. As shown in FIG. 8, the first indication information may indicate a first cycle of a first cell, a second cycle of a second cell, and a third cycle of a third cell, where the first cell, the second cell, and the third cell are serving cells of the terminal device. The third cycle of the third cell is that the first DTX configuration is not configured, and the second cycle of the second cell is different from the first cycle of the first cell. For related descriptions of the cycle, refer to the foregoing content. Details are not described herein again. The second cycle and the third cycle may be the same, or may be different.

It should be noted that the first configuration information and the second configuration information may be same configuration information. In other words, one piece of configuration information may include content indicated by the first configuration information and content indicated by the second configuration information. For example, the first configuration information may include configuration information of one or more cycles of each of one or more cells, that is, the first configuration information is the second configuration information. Alternatively, the second configuration information includes the first configuration information, that is, the content indicated by the second configuration information includes the content indicated by the first configuration information, that is, the first configuration information is a subset of the second configuration information.

Step S602: After the terminal device detects a beam failure in the first cell, the terminal device performs beam failure recovery BFR within the first time period based on the CSI-RS used for the BFR of the first cell and/or the SR used for the BFR of the first cell.

Specifically, when the network device and/or the terminal device are/is configured with the first DTX configuration, the first channel is not transmitted in the first cell within the inactive time (for example, the first time period) in the first DTX configuration, and the first channel does not include one or more of the following signals: the CSI-RS and the SR that are used for the BFR of the first cell. The first cell is the SpCell or the SCell. Therefore, after the terminal device detects the beam failure in the SpCell, the terminal device performs BFR within the first time period based on one or more of the signals that are not included in the first channel. Alternatively, after the terminal device detects the beam failure in the SCell, the terminal device performs BFR within the first time period based on one or more of the signals that are not included in the first channel. In this way, flexibility of the first DTX configuration can be improved, to meet a requirement of the terminal device for performing BFR.

In an implementation, the terminal device first performs, in the SpCell within the first time period, BFR based on CFRA based on one or more of the signals that are not included in the first channel, and if CFRA fails, starts contention-based random access CBRA to perform BFR.

In a possible implementation, after the terminal device detects the beam failure in the SpCell, the terminal device transmits the first channel within the first time period when one or more of the following cases occur. In other words, the terminal device is in an active state within the first time period or in a period of time of the first time period. The terminal device in the active state may transmit the first channel in the SpCell within the first time period.

In a possible implementation, the following cases include one or more of a case 1, a case 2, a case 3, a case 4, a case 5, a case 6, or a case 7.

Case 1: A RACH used for the BFR is sent, and an RAR used for the BFR is successfully received.

It should be noted that the terminal device needs to perform BFR of the SpCell, and the terminal device may first initiate BFR of CFRA. In a BFR process of the CFRA, there is a step in which the terminal device detects, in a search space corresponding to the RACH, a PDCCH scrambled by a C-RNTI, and receives a corresponding RAR used for the BFR based on the PDCCH. When the RAR is successfully received, it is considered that the BFR of the SpCell succeeds. Therefore, after the terminal device sends the RACH used for the BFR to the network device in the SpCell, and before the terminal device successfully receives the RAR used for the BFR from the network device, the terminal device is in the active state within the first time period, and may receive the RAR used for the BFR. Correspondingly, before the network device receives the RACH used for the BFR, and after the network device sends the RAR used for the BFR, the network device is in an active state within the first time period.

Case 2: After a RACH used for the BFR is sent, a HARQ-ACK corresponding to an RAR is sent.

When the RAR used for the BFR is successfully received, it is considered that the BFR of the SpCell succeeds. Therefore, after the terminal device sends, to the network device in the SpCell, the RACH used for the BFR, and before the terminal device sends, to the network device, the HARQ-ACK corresponding to the RAR used for the BFR, the terminal device is in the active state within the first time period, and may send the HARQ-ACK corresponding to the RAR. Correspondingly, after the network device receives the RACH used for the BFR, and before the network device receives the HARQ-ACK corresponding to the RAR, the network device is in an active state within the first time period.

Case 3: A beam failure recovery timer beamFailureRecoveryTimer is started, and the beamFailureRecoveryTimer has not expired or stopped, that is, the beamFailureRecoveryTimer is running (when the beamFailureRecoveryTimer is running).

It should be noted that, after sending, to the network device in the SpCell, a RACH used for the BFR, the terminal device starts the beamFailureRecoveryTimer, and receives a corresponding RAR used for the BFR when the beamFailureRecoveryTimer has not expired or stopped, indicating that the BFR of the SpCell succeeds. Therefore, after the terminal device starts the beamFailureRecovery Timer, and before the beamFailureRecoveryTimer expires or stops, the terminal device is in the active state within the first time period, and may transmit the first channel to perform BFR.

Case 4: A RACH used for the BFR is sent and random access is to be completed.

Therefore, after the terminal device sends, to the network device in the SpCell, the RACH used for the BFR, and before the random access is completed, the terminal device is in the active state within the first time period, and may transmit the first channel to perform BFR. Correspondingly, after the network device receives the RACH used for the BFR, and before the random access is completed, the network device is in an active state.

Case 5: A RACH used for the BFR is sent and the BFR of the SpCell is to be completed.

Therefore, after the terminal device sends, to the network device in the SpCell, the RACH used for the BFR, and before the BFR of the SpCell is completed, the terminal device is in the active state within the first time period, and may transmit the first channel to perform BFR. Correspondingly, after the network device receives the RACH used for the BFR, until the BFR of the SpCell is completed, the network device is in an active state.

Case 6: A first timer or a first time window is started, and the first timer or the first time window has not expired or stopped.

Therefore, after the terminal device starts the first timer or the first time window in the SpCell, and before the first timer or the first time window expires or stops, the terminal device is in the active state within the first time period, and may transmit the first channel to perform BFR.

The first timer includes a random access contention resolution timer ra-ContentionResolutionTimer, and the first time window includes one or more of a random access message B-receive time window MsgB-ResponseWindow and a random access response time window ra-ResponseWindow. That the first timer is running indicates that the first timer is started but the first timer has not expired. That the first time window is running indicates that the first time window is started but the first time window has not expired.

It should be noted that, in a process in which the terminal device initiates the CFRA to perform BFR, after a RACH is sent, the terminal device starts the ra-ResponseWindow. When the ra-ResponseWindow has not expired or stopped, it indicates that the BFR of the SpCell succeeds.

Case 7: A second timer is started and the second timer has not expired or stopped.

Therefore, after the terminal device starts the second timer in the SpCell, and before the second timer expires or stops, the terminal device is in the active state within the first time period, and may transmit the first channel to perform BFR.

The second timer includes one or more of a discontinuous reception-inactivity timer drx-InactivityTimer, a discontinuous reception-downlink retransmission timer drx-RetransmissionTimerDL, or a discontinuous reception-uplink retransmission timer drx-RetransmissionTimerUL. That the second timer is running indicates that the second timer is started but the second timer has not expired.

It should be noted that, when the terminal device is configured with the C-DRX mechanism, if a PDCCH for scheduling data transmission is detected within on duration, the terminal device starts or restarts the DRX inactivity timer (drx-InactivityTimer). When the DRX inactivity timer is running, that is, before the DRX inactivity timer expires or stops, the terminal device is in active time.

The drx-RetransmissionTimerDL may indicate the longest time for the terminal device to wait for downlink retransmission data, and when drx-HARQ-RTT-TimerDL (used for downlink transmission) expires and corresponding downlink data is not correctly demodulated, the timer is started. Before the drx-RetransmissionTimerDL expires, the terminal device is in the active time in the DRX mechanism of the terminal device.

The drx-RetransmissionTimerUL may indicate the longest time for the terminal device to wait for an uplink retransmission grant (grant), and when drx-HARQ-RTT-TimerUL (used for uplink transmission) expires, the timer is started. Before the drx-RetransmissionTimerUL expires or stops, a UE is in an active period, and the terminal apparatus is in the active time in the DRX mechanism of the terminal device.

In another possible implementation, after the terminal device detects the beam failure in the SCell, the terminal device transmits the first channel within the first time period when one or more of the following cases occur. In other words, the terminal device is in the active state within the first time period or in a period of time of the first time period. The terminal device in the active state may transmit the first channel in the SCell within the first time period.

In a possible implementation, the following cases include one or more of a case 8, a case 9, a case 10, a case 11, a case 12, or a case 13.

Case 8: A scheduling request SR used for the BFR of the SCell is sent and the SR is in a pending state pending, or an sr-ProhibitTimer is started and the sr-ProhibitTimer has not expired or stopped.

It should be noted that, because no PRACH resource is reserved in the SCell, when there is no available uplink resource or an uplink resource cannot carry a truncated MAC CE used for the BFR, the terminal device needs to send an SR to request a network side to allocate an uplink resource. Therefore, after the terminal device sends, in the SCell, the scheduling request SR used for the BFR of the SCell, and before the SR is in the pending state, the terminal device is in the active state within the first time period, and may transmit the first channel to perform BFR. Correspondingly, after the network device receives the scheduling request SR used for the BFR of the SCell, and before the SR is in the pending state pending, the network device is in an active state.

Alternatively, after the terminal device starts the sr-ProhibitTimer and before the sr-ProhibitTimer expires or stops, the terminal device is in the active state within the first time period, and may transmit the first channel to perform BFR.

Case 9: A MAC CE used for the BFR is sent before a UL grant that is used to schedule initial transmission data and that uses a same HARQ process as the MAC CE used for the BFR is received.

Therefore, after the terminal device sends, to the network device in the SCell, the MAC CE used for the BFR, and before the terminal device receives the UL grant that is used to schedule the initial transmission data and that uses the same HARQ process as the MAC CE used for the BFR, the terminal device is in the active state within the first time period, and may transmit the first channel to perform BFR. Correspondingly, after the network device receives, in the SCell, the MAC CE used for the BFR from the terminal device, and before the network device sends the UL grant that is used to schedule the initial transmission data and that uses the same HARQ process as the MAC CE used for the BFR, the network device is in an active state.

Case 10: A MAC CE used for the BFR is sent before a PUSCH corresponding to a UL grant that is used to schedule initial transmission data and that uses a same HARQ process as the MAC CE used for the BFR is sent.

Therefore, after the terminal device sends, to the network device in the SCell, the MAC CE used for the BFR, and before the terminal device sends the PUSCH corresponding to the UL grant that is used to schedule the initial transmission data and that uses the same HARQ process as the MAC CE used for the BFR, the terminal device is in the active state within the first time period, and may transmit the first channel to perform BFR. Correspondingly, after the network device receives the MAC CE used for the BFR, and before the network device receives the PUSCH corresponding to the UL grant that is used to schedule the initial transmission data and that uses the same HARQ process as the MAC CE used for the BFR, the network device is in an active state.

Case 11: An SR used for the BFR of the SCell is sent before a UL grant that is used to schedule initial transmission data and that uses a same HARQ process as a MAC CE used for the BFR is received.

Therefore, after the terminal device sends, in the SCell, the SR used for the BFR of the SCell, and before the terminal device sends the UL grant that is used to schedule the initial transmission data and that uses the same HARQ process as the MAC CE used for the BFR, the terminal device is in the active state within the first time period, and may transmit the first channel to perform BFR. Correspondingly, after the network device receives the SR used for the BFR of the SCell, and before the network device sends the UL grant that is used to schedule the initial transmission data and that uses the same HARQ process as the MAC CE used for the BFR, the network device is in an active state.

Case 12: An SR used for the BFR of the SCell is sent before a PUSCH corresponding to a UL grant that is used to schedule initial transmission data and that uses a same HARQ process as a MAC CE used for the BFR is sent.

Therefore, after the terminal device sends, in the SCell, the SR used for the BFR of the SCell, and before the terminal device sends the PUSCH corresponding to the UL grant that is used to schedule the initial transmission data and that uses the same HARQ process as the MAC CE used for the BFR, the terminal device is in the active state within the first time period, and may transmit the first channel to perform BFR. Correspondingly, after the network device receives the SR used for the BFR of the SCell, and before the network device receives the PUSCH corresponding to the UL grant that is used to schedule the initial transmission data and that uses the same HARQ process as the MAC CE used for the BFR, the network device is in an active state.

Case 13: The terminal device starts a third timer in the SCell, and the third timer has not expired or stopped.

Therefore, after the terminal device starts the third timer in the SCell and before the third timer expires or stops, the terminal device is in the active state within the first time period, and may transmit the first channel to perform BFR.

The third timer includes one or more of a discontinuous reception-inactivity timer drx-InactivityTimer, a discontinuous reception-downlink retransmission timer drx-RetransmissionTimerDL, or a discontinuous reception-uplink retransmission timer drx-RetransmissionTimerUL. That the third timer is running indicates that the third timer is started but the third timer has not expired. For the drx-InactivityTimer, the drx-RetransmissionTimerDL, and the drx-RetransmissionTimerUL, refer to the foregoing related content. Details are not described herein again.

It should be noted that, that various timers mentioned in this embodiment of this application do not expire or are not stopped after being started may indicate that the timers are running, that is, when the timers run, the terminal device is in the active state in the first cell within the first time period.

Before the terminal device receives the first indication information, or after the terminal device receives the first indication information, the terminal device further receives second indication information, where the second indication information is a deactivation instruction of the first cell, and may indicate to deactivate the first cell, and determines that the BFR process is completed or determines not to transmit the first channel in the first cell within the first time period. For example, when the first cell is a PsCell, after the terminal device detects a beam failure, the terminal device receives the second indication information (for example, an SCG deactivation instruction) within the first time period in a process of performing BFR based on one or more of the signals that are not included in the first channel. The terminal device may consider that the BFR is successfully completed or a first state is invalid, that is, the terminal device does not transmit the first channel within the first time period in the PsCell. In this way, when the first cell is deactivated, the terminal device and the network device can end the active state as soon as possible, to reduce energy consumption of the network device and the terminal device.

In this application, that the terminal transmits the first channel within the first time period may be understood as that the terminal device may transmit the first channel within the first time period, or the terminal device is allowed to transmit the first channel within the first time period. This does not mean that the first channel is inevitably transmitted. Therefore, in this application, that the terminal transmits the first channel within the first time period may alternatively be described as that the terminal is in the active state within the first time period.

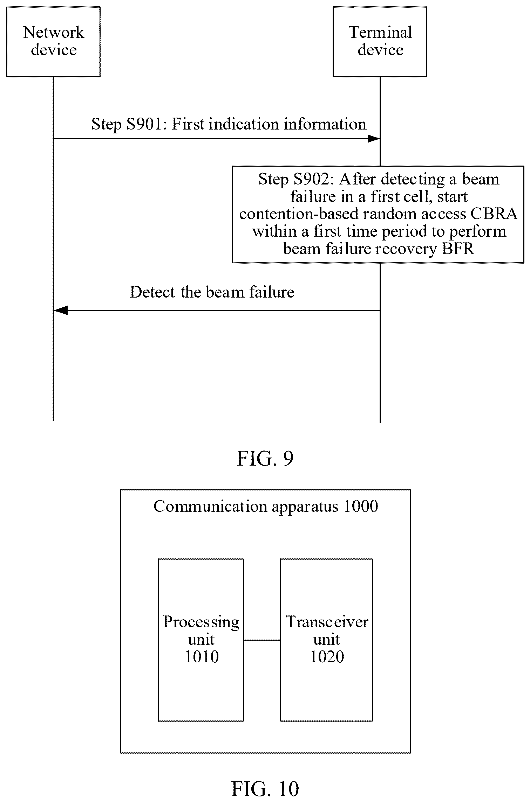

FIG. 9 is a schematic flowchart of another communication method according to an embodiment of this application. The schematic flowchart shown in FIG. 9 is described by using an example in which a network device and a terminal device interact with each other for execution. The network device may be a communication unit, a component, or a chip in the network device, or an apparatus that matches the network device. The terminal device may be a communication unit, a component, or a chip in the terminal device, or an apparatus that matches the terminal device. For related descriptions of the network device and the terminal device, refer to the foregoing content. Details are not described again.

The communication method shown in FIG. 9 includes step S901 and step S902. It should be understood that, in this application, for ease of description, execution time, a quantity of execution times, and the like of the one or more steps are not limited in this embodiment of this application.

Step S901: The network device sends first indication information to the terminal device.

Correspondingly, the terminal device may receive the first indication information from the network device. The first indication information indicates a first DTX configuration, and the first DTX configuration includes that the terminal device is in an inactive state within a first time period in a first cell. In other words, the first indication information indicates that the terminal device is not allowed to transmit a first channel in the first cell within the first time period, and the first channel does not include one or more of the following signals: a CSI-RS used for BFR of the first cell or an SR used for the BFR of the first cell.

In a possible implementation, the terminal device activates a first cycle based on the first indication information, so that when the terminal device does not transmit a channel in the first cell within the first time period, if the terminal device already has a cycle configuration of the first cycle, for example, before step S901, the network device sends second configuration information to the terminal device, where the second configuration information includes configuration information of one or more cycles of the terminal device in each of one or more cells, the first cell is one of the one or more cells, and the first cycle is one of one or more cycles of the first cell. The first cycle means that the terminal device does not transmit the first channel within the first time period. After receiving the first indication information, the terminal device may activate, based on the first indication information, the first cycle that is of the terminal device in the first cell and that is in the second configuration information, so that the terminal device does not transmit the first channel in the first cell within the first time period, where the first time period is a time period in the first cycle.

For related descriptions of the first indication information, the first time period, the first channel, and the second configuration information, refer to the related descriptions in step S601. Details are not described herein again.

Step S902: After the terminal device detects a beam failure in the first cell, the terminal device starts contention-based random access CBRA within the first time period to perform beam failure recovery BFR.

Specifically, when the network device and/or the terminal device are/is configured with the first DTX configuration, the first channel is not transmitted in the first cell in inactive time (for example, the first time period) in the first DTX configuration. After the terminal device detects a beam failure in an SpCell, the terminal device selects, based on SSB measurement, an SSB that meets a condition, for example, meets an RSRP performance requirement, sends a preamble sequence on a corresponding RACH resource based on an index of the SSB, and starts the contention-based random access CBRA to perform beam failure recovery BFR. Alternatively, after the terminal device detects a beam failure in an SCell, the terminal device performs measurement based on an SSB (the SSB may be sent in an SpCell or another SCell), sends a preamble sequence on a corresponding RACH resource based on an index corresponding to the selected SSB, and starts the contention-based random access CBRA to perform beam failure recovery BFR.

In a possible implementation, after the terminal device detects the beam failure in the SpCell, the terminal device is in an active state within the first time period when one or more of the following cases occur.

In a possible implementation, the following cases include one or more of a case 14, a case 15, a case 16, or a case 17.

Case 14: The terminal device starts a third timer in the SpCell, and the third timer has not expired or stopped.

Therefore, after the terminal device starts the third timer in the SpCell and before the third timer expires or stops, the terminal device is in the active state within the first time period, and may start the contention-based random access CBRA to perform BFR.

The third timer includes one or more of an ra-ContentionResolutionTimer, an MsgB-ResponseWindow, or an ra-ResponseWindow. For related descriptions of the ra-ContentionResolutionTimer, the MsgB-ResponseWindow, and the ra-ResponseWindow, refer to the foregoing content. Details are not described herein again.

Case 15: A random access channel RACH is sent and random access is to be completed.

Therefore, after the terminal device sends the random access channel RACH in the SpCell and before the random access is completed, the terminal device is in the active state within the first time period, and may start the contention-based random access CBRA to perform BFR. Correspondingly, after the network device receives the random access channel RACH, and before the random access is completed, the network device is in an active state.

Case 16: A RACH is sent and the BFR of the SpCell is to be completed.

Therefore, after the terminal device sends the RACH in the SpCell and before the BFR of the SpCell is completed, the terminal device is in the active state within the first time period, and may start the contention-based random access CBRA to perform BFR. Correspondingly, after the network device receives the RACH, and before the BFR of the SpCell is completed, the network device is in an active state.

Case 17: A fourth timer is started, and the fourth timer has not expired or stopped.

Therefore, after the terminal device starts the fourth timer in the SpCell, and before the fourth timer expires or stops, the terminal device is in the active state within the first time period, and may start the contention-based random access CBRA to perform BFR. The fourth timer includes one or more of a drx-InactivityTimer, a drx-RetransmissionTimerDL, or a drx-RetransmissionTimerUL. For related descriptions of the drx-InactivityTimer, the drx-RetransmissionTimerDL, and the drx-RetransmissionTimerUL, refer to the foregoing content. Details are not described herein again.

In a possible implementation, after the terminal device detects a beam failure in an SCell, the terminal device is in an active state within the first time period when one or more of the following cases occur.

In a possible implementation, the following cases include one or more of a case 18, a case 19, a case 20, a case 21, a case 22, or a case 23.

Case 18: A MAC CE used for the BFR is sent before a new transmission UL grant that uses a same HARQ process as the MAC CE used for the BFR is received.

Therefore, after the terminal device sends, in the SCell, the MAC CE used for the BFR, and before the terminal device receives the new transmission UL grant that uses the same HARQ process as the MAC CE used for the BFR, the terminal device is in the active state within the first time period, and may start the contention-based random access CBRA to perform BFR. Correspondingly, after the network device receives the MAC CE used for the BFR, and before the network device sends the new transmission UL grant that uses the same HARQ process as the MAC CE used for the BFR, the network device is in an active state.

Case 19: The terminal device sends, in the SCell, a MAC CE used for the BFR before sending a PUSCH corresponding to a new transmission UL grant that uses a same HARQ process as the MAC CE used for the BFR.

Therefore, after the terminal device sends, in the SCell, the MAC CE used for the BFR, and before the terminal device sends the PUSCH corresponding to the new transmission UL grant that uses the same HARQ process as the MAC CE used for the BFR, the terminal device is in the active state within the first time period, and may start the contention-based random access CBRA to perform BFR.

Case 20: The terminal device starts a fifth timer in the SCell, and the fifth timer has not expired or stopped.

Therefore, after the terminal device starts the fifth timer in the SCell, and before the fifth timer expires or stops, the terminal device is in the active state within the first time period, and may start the contention-based random access CBRA to perform BFR.

The fifth timer includes one or more of a drx-InactivityTimer, a drx-RetransmissionTimerDL, or a drx-RetransmissionTimerUL. For related descriptions of the drx-InactivityTimer, the drx-RetransmissionTimerDL, or the drx-RetransmissionTimerUL, refer to the foregoing content. Details are not described herein again.

Case 21: The terminal device starts a sixth timer in the SCell, and the sixth timer of the terminal device has not expired or stopped.

Therefore, after the terminal device starts the sixth timer in the SCell and before the sixth timer expires or stops, the terminal device is in the active state within the first time period, and may start the contention-based random access CBRA to perform BFR.

The sixth timer includes one or more of an ra-ContentionResolutionTimer, an MsgB-ResponseWindow, or an ra-ResponseWindow. For related descriptions of the ra-ContentionResolutionTimer, the MsgB-ResponseWindow, or the ra-ResponseWindow, refer to the foregoing content. Details are not described herein again.

Case 22: A RACH is sent and random access is to be completed.

Therefore, after the terminal device sends the RACH in the SCell and before the random access is completed, the terminal device is in the active state within the first time period, and may start the contention-based random access CBRA to perform BFR. Correspondingly, after the network device receives the RACH and before the random access is completed, the network device is in an active state.

Case 23: A RACH is sent and the BFR of the SpCell is to be completed.

Therefore, after the terminal device sends the RACH in the SCell and before the BFR of the SCell is completed, the terminal device is in the active state within the first time period, and may start the contention-based random access CBRA to perform BFR. Correspondingly, after the network device receives the RACH, and before the BFR of the SCell is completed, the network device is in an active state.

After the terminal device receives the first indication information, the terminal device further receives second indication information, where the second indication information is a deactivation instruction of the first cell, and may indicate to deactivate the first cell, and determines that the BFR process is completed or determines not to transmit the first channel in the first cell. For example, when the first cell is an SCell, after the terminal device detects a beam failure, the terminal device receives the second indication information (for example, an SCG deactivation instruction) within the first time period in a process of performing BFR based on one or more of the signals that are not included in the first channel. The terminal device may consider that the BFR is successfully completed or a first state is invalid, that is, the terminal device does not transmit the first channel within the first time period in the SCell. In this way, when the first cell is deactivated, the terminal device and the network device can end the active state as soon as possible, to reduce energy consumption of the network device and the terminal device.

It may be understood that, to implement the functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of the hardware and computer software. Whether a function is performed by hardware or hardware driven by computer software depends on particular application scenarios and design constraint conditions of the technical solutions.

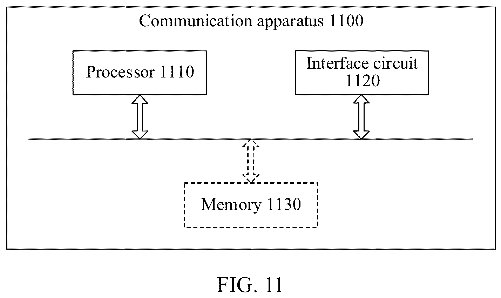

FIG. 10 and FIG. 11 are diagrams of structures of possible communication apparatuses according to embodiments of this application. The communication apparatuses may be configured to implement functions of the terminal device or the network device in the foregoing method embodiments, and therefore can also implement the beneficial effects in the foregoing method embodiments. In embodiments of this application, the communication device may be one of the terminal apparatuses 120a to 120j shown in FIG. 1, may be the network apparatus 110a or 110b shown in FIG. 1, or may be a module (for example, a chip) used in the terminal apparatus or the network apparatus.

As shown in FIG. 10, the communication apparatus 1000 includes a processing unit 1010 and a transceiver unit 1020.

In a possible implementation, the communication apparatus 1000 is configured to implement the functions of the terminal device or the network device in the method embodiment shown in FIG. 6.

When the communication apparatus 1000 is configured to implement the function of the terminal device in the method embodiment shown in FIG. 6, the transceiver unit 1020 is configured to receive first indication information from the network device, where the first indication information indicates a first DTX configuration, the first DTX configuration includes skipping transmitting a first channel in a first cell within a first time period, and the first channel does not include one or more of the following signals: a CSI-RS used for BFR of the first cell or an SR used for the BFR of the first cell. After the processing unit 1010 detects a beam failure in the first cell, the processing unit 1010 performs BFR within the first time period based on the CSI-RS used for the BFR of the first cell and/or the SR used for the BFR of the first cell.

In another possible implementation, when the first cell is a special cell SpCell, the processing unit 1010 is specifically configured to:
the processing unit 1010 transmits the first channel within the first time period when one or more of the following cases occur:
after a RACH used for the BFR is sent, an RAR used for the BFR is received;
after a RACH used for the BFR is sent, a HARQ-ACK corresponding to an RAR used for the BFR is sent;
a RACH used for the BFR is sent and random access is to be completed;
a RACH used for the BFR is sent and the BFR of the SpCell is to be completed;
a beam failure recovery timer beamFailureRecoveryTimer is started and the beam failure recovery timer has not expired or stopped;
a random access contention resolution timer ra-ContentionResolutionTimer is started and the random access contention resolution timer has not expired or stopped, a random access message B-receive time window MsgB-ResponseWindow is started and the random access message B-receive time window has not expired or stopped, or a random access response time window ra-ResponseWindow is started and the random access response time window has not expired or stopped; or
a discontinuous reception DRX-inactivity timer drx-InactivityTimer is started and the discontinuous reception-inactivity timer has not expired or stopped, a discontinuous reception-downlink retransmission timer drx-RetransmissionTimerDL is started and the discontinuous reception-downlink retransmission timer has not expired or stopped, or a discontinuous reception-uplink retransmission timer drx-RetransmissionTimerUL is started and the discontinuous reception-uplink retransmission timer has not expired or stopped.

In another possible implementation, when the first cell is a secondary cell SCell, the processing unit 1010 is specifically configured to:
the processing unit 1010 transmits the first channel within the first time period when one or more of the following cases occur:
a scheduling request SR used for the BFR of the SCell is sent and the SR is in a pending state pending, or an SR transmission timer sr-ProhibitTimer on a physical uplink control channel is started and the sr-ProhibitTimer has not expired or stopped;
a medium access control control element MAC CE used for the BFR is sent before a new transmission UL grant that uses a same HARQ process as the MAC CE used for the BFR is received;
a medium access control control element MAC CE used for the BFR is sent before a PUSCH corresponding to a new transmission UL grant that uses a same HARQ process as the MAC CE used for the BFR is sent;
an SR used for the BFR of the SCell is sent before a new transmission UL grant that uses a same HARQ process as a MAC CE used for the BFR is received;
an SR used for the BFR of the SCell is sent before a PUSCH corresponding to a new transmission UL grant that uses a same HARQ process as a MAC CE used for the BFR is sent; or
a drx-InactivityTimer is started and the drx-InactivityTimer has not expired or stopped, a drx-RetransmissionTimerDL is started and the drx-RetransmissionTimerDL has not expired or stopped, or a drx-RetransmissionTimerUL is started and the drx-RetransmissionTimerUL has not expired or stopped.

When the communication apparatus 1000 is configured to implement the function of the network device in the method embodiment shown in FIG. 6, the transceiver unit 1020 is configured to send first indication information to the terminal device, where the first indication information indicates a first DTX configuration, the first DTX configuration includes skipping transmitting a first channel in a first cell within a first time period, and the first channel does not include one or more of the following signals: a CSI-RS used for BFR of the first cell or an SR used for the BFR of the first cell.

In another possible implementation, when the first cell is a special cell SpCell, the processing unit 1010 is further configured to:
the processing unit 1010 transmits the first channel within the first time period when one or more of the following cases occur:
after a RACH used for the BFR is received, an RAR used for the BFR is sent;
after a RACH used for the BFR is received, a HARQ-ACK corresponding to an RAR used for the BFR is received;
a RACH used for the BFR is received and random access is to be completed; or
a RACH used for the BFR is received and the BFR of the SpCell is to be completed.

In another possible implementation, when the first cell is a secondary cell SCell, the processing unit 1010 is further configured to:
the processing unit 1010 transmits the first channel within the first time period when one or more of the following cases occur:
a scheduling request SR used for the BFR of the SCell is received and the SR is in a pending state pending;
a medium access control control element MAC CE used for the BFR is received before a new transmission UL grant uses a same HARQ process as the MAC CE used for the BFR is sent;
a medium access control control element MAC CE used for the BFR is received before a PUSCH corresponding to a new transmission UL grant that uses a same HARQ process as the MAC CE used for the BFR is received;
an SR used for the BFR of the SCell is received before a new transmission UL grant that uses a same HARQ process as a MAC CE used for the BFR is sent; or
an SR used for the BFR of the SCell is received before a PUSCH corresponding to a new transmission UL grant that uses a same HARQ process as a MAC CE used for the BFR is received.

In another possible implementation, the communication apparatus 1000 is configured to implement the function of the terminal apparatus or the network apparatus in the method embodiment shown in FIG. 9.

When the communication apparatus 1000 is configured to implement the function of the terminal device in the method embodiment shown in FIG. 9, the transceiver unit 1020 is configured to receive first indication information from the network device, where the first indication information indicates a first DTX configuration, and the first DTX configuration includes that the terminal device is in an inactive state within a first time period in a first cell. After the processing unit 1010 detects a beam failure in the first cell, the processing unit 1010 starts contention-based random access CBRA within the first time period to perform BFR.

In a possible implementation, the first DTX configuration includes skipping transmitting a first channel in the first cell within the first time period, and the first channel includes one or more of the following signals: a CSI-RS used for BFR of the first cell or an SR used for the BFR of the first cell.

In a possible implementation, the processing unit 1010 is specifically configured to:
include a MAC CE used for the BFR in an MsgA or an Msg3.

In another possible implementation, when the first cell is an SpCell, that the processing unit 1010 starts the contention-based random access CBRA within the first time period to perform BFR includes:
the communication apparatus 1000 is in an active state within the first time period when one or more of the following cases occur:
an ra-ContentionResolutionTimer is started and the ra-ContentionResolutionTimer has not expired or stopped, an MsgB-ResponseWindow is started and the MsgB-ResponseWindow has not expired or stopped, or an ra-ResponseWindow is started and the ra-ResponseWindow has not expired or stopped;
a random access channel RACH is sent and random access is to be completed;
a RACH is sent and the BFR of the SpCell is to be completed; or
a drx-InactivityTimer is started and the drx-InactivityTimer has not expired or stopped, a drx-RetransmissionTimerDL is started and the drx-RetransmissionTimerDL has not expired or stopped, or a drx-RetransmissionTimerUL is started and the drx-RetransmissionTimerUL has not expired or stopped.

In another possible implementation, when the first cell is an SCell, that the processing unit 1010 starts the contention-based random access CBRA within the first time period to perform BFR includes:
the communication apparatus 1000 is in an active state within the first time period when one or more of the following cases occur:
a MAC CE used for the BFR is sent before a new transmission UL grant that uses a same HARQ process as the MAC CE used for the BFR is received;
a MAC CE used for the BFR is sent before a PUSCH corresponding to a new transmission UL grant that uses a same HARQ process as the MAC CE used for the BFR is sent;
a drx-InactivityTimer is started and the drx-InactivityTimer has not expired or stopped, a drx-RetransmissionTimerDL is started and the drx-RetransmissionTimerDL has not expired or stopped, or a drx-RetransmissionTimerUL is started and the drx-RetransmissionTimerUL has not expired or stopped;
an ra-ContentionResolutionTimer is started and the ra-ContentionResolutionTimer has not expired or stopped, an MsgB-ResponseWindow is started and the MsgB-ResponseWindow has not expired or stopped, or an ra-ResponseWindow is started and the ra-ResponseWindow has not expired or stopped;
a RACH is sent and random access is to be completed; or
a RACH is sent and the BFR of the SpCell is to be completed.

In another possible implementation, when the first cell is an SCell, the processing unit 1010 is specifically configured to:
when performing BFR, if there is no available uplink shared channel resource UL-SCH within the first time period, start the contention-based random access CBRA to perform BFR.

When the communication apparatus 1000 is configured to implement the function of the network device in the method embodiment shown in FIG. 9, the transceiver unit 1020 is configured to send first indication information to the terminal device, where the first indication information indicates a first DTX configuration, and the first DTX configuration includes that the terminal device is in an inactive state within a first time period in a first cell.

In a possible implementation, the first DTX configuration includes skipping transmitting a first channel in the first cell within the first time period, and the first channel includes one or more of the following signals: a CSI-RS used for BFR of the first cell or an SR used for the BFR of the first cell.

In a possible implementation, an MsgA or an Msg3 includes a MAC CE used for the BFR.

In another possible implementation, when the first cell is an SpCell, the communication apparatus 1000 is in an active state within the first time period when one or more of the following cases occur:
a random access channel RACH is sent and random access is to be completed; or
a RACH is sent and the BFR of the SpCell is to be completed.

In another possible implementation, when the first cell is an SCell, the communication apparatus 1000 is in an active state within the first time period when one or more of the following cases occur:
a MAC CE used for the BFR is sent before a new transmission UL grant that uses a same HARQ process as the MAC CE used for the BFR is received; or
a MAC CE used for the BFR is sent before a PUSCH corresponding to a new transmission UL grant that uses a same HARQ process as the MAC CE used for the BFR is sent.

In another possible implementation, the first channel includes one or more of the following: an uplink channel and a downlink channel.

The uplink channel includes one or more of the following: a configured grant physical uplink shared channel CG PUSCH, a semi-persistent scheduling physical downlink shared channel SPS PDSCH, a hybrid automatic repeat request feedback HARQ-ACK, a scheduling request SR, a physical random access channel, a random access message A, or a random access message 3.

The downlink channel includes one or more of the following: a physical downlink control channel PDCCH scrambled by a modulation and coding scheme-cell radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal or physical broadcast channel block SSB, system information, a paging message, a random access message 2, a random access message 4, a random access message B, or a semi-persistent scheduling physical downlink shared channel SPS PDSCH.

In another possible implementation, the transceiver unit 1020 is further configured to send or receive second indication information, where the second indication information indicates to deactivate the first cell, and determine that the BFR succeeds or determine not to transmit the first channel in the first cell.

In another possible implementation, the first indication information includes one or more of the following: RRC signaling, a medium access control control element MAC CE, or downlink control information DCI.

In another possible implementation, the first indication information is a MAC CE or DCI, and when the communication apparatus 1000 is the terminal device, the transceiver unit 1020 is further configured to receive first configuration information; and when the communication apparatus 1000 is the network device, the transceiver unit 1020 is further configured to send first configuration information, where the first configuration information includes configuration information of one or more cycles, the first time period is a time period in a target cycle, the target cycle is one of the one or more cycles, and the first indication information is used to activate a configuration for the target cycle in the first configuration information, so that the terminal device is in the inactive state within the first time period in the first cell.

In another possible implementation, the first indication information is DCI, the DCI is carried on a PDCCH scrambled by a first RNTI, the first RNTI is a newly added radio network temporary identifier, and the PDCCH scrambled by the first RNTI does not belong to the first channel.

In another possible implementation, the first indication information is DCI, the DCI is carried on a PDCCH scrambled using a second RNTI, the DCI includes a first indication field, the second RNTI is an existing radio network temporary identifier, and the first indication field indicates that the DCI is used to configure the first DTX configuration, that is, is used to distinguish a function of the second RNTI, that is, identify that the first indication information indicates that the terminal device does not transmit the first channel within the first time period.

In a possible implementation, first indication information is DCI, the DCI is obtained by adding one or more fields to an existing DCI format, and the added one or more fields are used to activate or deactivate the first DTX configuration, that is, indicate that the first channel is not transmitted in the first cell within the first time period.

For more detailed descriptions of the processing unit 1010 and the transceiver unit 1020, directly refer to the related descriptions in the method embodiments shown in FIG. 6 to FIG. 9. Details are not described herein again.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions to be executed by the processor 1110, input data needed by the processor 1110 to run instructions, or data generated after the processor 1110 runs instructions.

When the communication apparatus 1100 is configured to implement the method shown in FIG. 6 or FIG. 9, the processor 1110 is configured to implement the function of the processing unit 1010 shown in FIG. 10, and the interface circuit 1120 is configured to implement the function of the transceiver unit 1020 shown in FIG. 10.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network apparatus, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A communication method, wherein the method comprises:
receiving first indication information, wherein the first indication information indicates a first discontinuous transmission DTX configuration, the first DTX configuration comprises skipping transmitting a first channel in a first cell within a first time period, and the first channel does not comprise one or more of the following signals: a channel state information reference signal CSI-RS used for beam failure recovery BFR of the first cell or a scheduling request SR used for the BFR of the first cell; and
after detecting a beam failure in the first cell, performing, by a terminal device, BFR within the first time period based on the CSI-RS used for the BFR of the first cell and/or the SR used for the BFR of the first cell.

2. The method according to claim 1, wherein when the first cell is a special cell SpCell, performing, by the terminal device, BFR within the first time period based on the CSI-RS used for the BFR of the first cell and/or the SR used for the first cell comprises:
transmitting, by the terminal device, the first channel within the first time period when one or more of the following cases occur:
after a random access channel RACH used for the BFR is sent, a random access response RAR used for the BFR is received;
after a RACH used for the BFR is sent, an automatic repeat request-acknowledgement HARQ-ACK corresponding to an RAR used for the BFR is sent;
a RACH used for the BFR is sent and random access is to be completed;
a RACH used for the BFR is sent and the BFR of the SpCell is to be completed;
a beam failure recovery timer beamFailureRecoveryTimer is started and the beam failure recovery timer has not expired or stopped;
a random access contention resolution timer ra-ContentionResolutionTimer is started and the random access contention resolution timer has not expired or stopped, a random access message B-receive time window MsgB-ResponseWindow is started and the random access message B-receive time window has not expired or stopped, or a random access response time window ra-Response Window is started and the random access response time window has not expired or stopped; or
a discontinuous reception DRX-inactivity timer drx-InactivityTimer is started and the discontinuous reception-inactivity timer has not expired or stopped, a discontinuous reception-downlink retransmission timer drx-RetransmissionTimerDL is started and the discontinuous reception-downlink retransmission timer has not expired or stopped, or a discontinuous reception-uplink retransmission timer drx-RetransmissionTimerUL is started and the discontinuous reception-uplink retransmission timer has not expired or stopped.

3. The method according to claim 1, wherein when the first cell is a secondary cell SCell, performing, by the terminal device, BFR within the first time period based on the CSI-RS used for the BFR of the first cell and/or the SR used for the BFR of the first cell comprises:
transmitting, by the terminal device, the first channel within the first time period when one or more of the following cases occur:
a scheduling request SR used for the BFR of the SCell is sent and the SR is in a pending state pending, or an SR transmission timer sr-ProhibitTimer on a physical uplink control channel is started and the sr-ProhibitTimer has not expired or stopped;
a medium access control control element MAC CE used for the BFR is sent before an uplink grant UL grant that is used to schedule initial transmission data and that uses a same automatic repeat request process HARQ process as the MAC CE used for the BFR is received;
a medium access control control element MAC CE used for the BFR is sent before a physical uplink shared channel PUSCH corresponding to a UL grant that is used to schedule initial transmission data and that uses a same automatic repeat request process HARQ process as the MAC CE used for the BFR is sent;
an SR used for the BFR of the SCell is sent before a UL grant that is used to schedule initial transmission data and that uses a same HARQ process as a MAC CE used for the BFR is received;
an SR used for the BFR of the SCell is sent before a PUSCH corresponding to a UL grant that is used to schedule initial transmission data and that uses a same HARQ process as a MAC CE used for the BFR is sent; or
a drx-InactivityTimer is started and the drx-InactivityTimer has not expired or stopped, a drx-RetransmissionTimerDL is started and the drx-RetransmissionTimerDL has not expired or stopped, or a drx-RetransmissionTimerUL is started and the drx-RetransmissionTimerUL has not expired or stopped.

4. The method according to any one of claims 1 to 3, wherein the first channel comprises one or more of the following: an uplink channel and a downlink channel, wherein
the uplink channel comprises one or more of the following: a configured grant physical uplink shared channel CG PUSCH, a semi-persistent scheduling physical downlink shared channel SPS PDSCH, a hybrid automatic repeat request feedback HARQ-ACK, a scheduling request SR, a physical random access channel, a random access message A, or a random access message 3; and
the downlink channel comprises one or more of the following: a physical downlink control channel PDCCH scrambled by a modulation and coding scheme-cell radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal or physical broadcast channel block SSB, system information, a paging message, a random access message 2, a random access message 4, a random access message B, or a semi-persistent scheduling physical downlink shared channel SPS PDSCH.

5. The method according to any one of claims 1 to 4, wherein the method further comprises:
receiving second indication information, wherein the second indication information indicates to deactivate the first cell, and determining that the BFR succeeds or determining not to transmit the first channel in the first cell within the first time period.

6. The method according to any one of claims 1 to 5, wherein the first indication information is a medium access control control element MAC CE or downlink control information DCI, and before receiving the first indication information, the method further comprises:
receiving first configuration information, wherein the first configuration information comprises configuration information of one or more cycles of the first cell, the first time period is a time period in a target cycle, the target cycle is one of the one or more cycles, and the first indication information is used to activate a configuration for the target cycle in the first configuration information, so that the terminal device does not transmit the first channel within the first time period in the first cell.

7. The method according to any one of claims 1 to 6, wherein the first indication information is DCI, the DCI is carried on a physical downlink control channel PDCCH scrambled by a first radio network temporary identifier RNTI, and the PDCCH scrambled by the first RNTI does not belong to the first channel.

8. The method according to any one of claims 1 to 6, wherein the first indication information is DCI, the DCI comprises a first indication field, and the first indication field indicates to configure the first DTX configuration by using the DCI.

9. A communication method, wherein the method comprises:
receiving first indication information, wherein the first indication information indicates a first DTX configuration, and the first DTX configuration comprises that a terminal device is in an inactive state within a first time period in a first cell; and
after detecting a beam failure in the first cell, starting, by the terminal device, contention-based random access CBRA within the first time period to perform BFR.

10. The method according to claim 9, wherein the first DTX configuration comprises skipping transmitting a first channel in the first cell within the first time period, the first channel comprises one or more of the following signals: a CSI-RS used for BFR of the first cell or an SR used for the BFR of the first cell.

11. The method according to claim 9 or 10, wherein starting, by the terminal device, the CBRA within the first time period to perform BFR comprises:
comprising a MAC CE used for the BFR in an MsgA or an Msg3.

12. The method according to claim 9 or 10, wherein when the first cell is an SpCell, starting, by the terminal device, the contention-based random access CBRA within the first time period to perform BFR comprises:
the terminal device is in an active state within the first time period when one or more of the following cases occur:
an ra-ContentionResolutionTimer is started and the ra-ContentionResolutionTimer has not expired or stopped, an MsgB-ResponseWindow is started and the MsgB-ResponseWindow has not expired or stopped, or an ra-ResponseWindow is started and the ra-ResponseWindow has not expired or stopped;
a random access channel RACH is sent and random access is to be completed;
a RACH is sent and the BFR of the SpCell is to be completed; or
a drx-InactivityTimer is started and the drx-InactivityTimer has not expired or stopped, a drx-RetransmissionTimerDL is started and the drx-RetransmissionTimerDL has not expired or stopped, or a drx-RetransmissionTimerUL is started and the drx-RetransmissionTimerUL has not expired or stopped.

13. The method according to claim 9 or 10, wherein when the first cell is an SCell, starting, by the terminal device, the contention-based random access CBRA within the first time period to perform BFR comprises:
the terminal device is in an active state within the first time period when one or more of the following cases occur:
a MAC CE used for the BFR is sent before a UL grant that is used to schedule initial transmission data and that uses a same HARQ process as the MAC CE used for the BFR is received;
a MAC CE used for the BFR is sent before a PUSCH corresponding to a UL grant that is used to schedule initial transmission data and that uses a same HARQ process as the MAC CE used for the BFR is sent;
a drx-InactivityTimer is started and the drx-InactivityTimer has not expired or stopped, a drx-RetransmissionTimerDL is started and the drx-RetransmissionTimerDL has not expired or stopped, or a drx-RetransmissionTimerUL is started and the drx-RetransmissionTimerUL has not expired or stopped;
an ra-ContentionResolutionTimer is started and the ra-ContentionResolutionTimer has not expired or stopped, an MsgB-ResponseWindow is started and the MsgB-ResponseWindow has not expired or stopped, or an ra-ResponseWindow is started and the ra-ResponseWindow has not expired or stopped;
a RACH is sent and random access is to be completed; or
a RACH is sent and the BFR of the SpCell is to be completed.

14. The method according to claim 9 or 10, wherein when the first cell is an SCell, starting, by the terminal device, the contention-based random access CBRA within the first time period to perform BFR comprises:
when performing BFR, if there is no available uplink shared channel UL-SCH resource within the first time period, starting, by the terminal, the contention-based random access CBRA to perform BFR.

15. The method according to any one of claims 10 to 14, wherein the first channel comprises one or more of the following: an uplink channel and a downlink channel, wherein
the uplink channel comprises one or more of the following: a configured grant physical uplink shared channel CG PUSCH, a semi-persistent scheduling physical downlink shared channel SPS PDSCH, a hybrid automatic repeat request feedback HARQ-ACK, a scheduling request SR, a physical random access channel PRACH, a random access message A MsgA, or a random access message 3 Msg3; and
the downlink signal comprises: a physical downlink control channel PDCCH scrambled by a modulation and coding scheme-cell radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal or physical broadcast channel block SSB, system information, a paging message, a random access message 2 Msg2, a random access message 4 Msg4, a random access message B MsgB, or a semi-persistent scheduling physical downlink shared channel SPS PDSCH.

16. The method according to any one of claims 9 to 15, wherein the method further comprises:
receiving second indication information, wherein the second indication information indicates to deactivate the first cell, and determining that the BFR succeeds or determining not to transmit the first channel in the first cell within the first time period.

17. The method according to any one of claims 9 to 16, wherein the first indication information is the MAC CE or DCI, and before receiving the first indication information, the method further comprises:
receiving first configuration information, wherein the first configuration information comprises configuration information of one or more cycles, the first time period is a time period in a first cycle, the first cycle is one of the one or more cycles, and the first indication information is used to activate a configuration for the first cycle in the first configuration information, so that the terminal device is in the inactive state within the first time period in the first cell.

18. The method according to any one of claims 9 to 16, wherein the first indication information is DCI, the DCI is carried on a PDCCH scrambled by a first RNTI, the first RNTI is a newly added radio network temporary identifier, and the PDCCH scrambled by the first RNTI indicates that the terminal device is in the inactive state within the first time period.

19. The method according to any one of claims 9 to 16, wherein the first indication information is DCI, the DCI comprises a first indication field, and the first indication field indicates to configure the first DTX configuration by using the DCI.

20. A communication method, wherein the method comprises:
sending first indication information to a terminal device, wherein the first indication information indicates a first DTX configuration, the first DTX configuration comprises skipping transmitting a first channel in a first cell within a first time period, and the first channel does not comprise one or more of the following signals: a CSI-RS used for BFR of the first cell or an SR used for the BFR of the first cell.

21. The method according to claim 20, wherein when the first cell is an SpCell, the method further comprises:
transmitting, by a network device, the first channel within the first time period when one or more of the following cases occur:
after a RACH used for the BFR is received, an RAR used for the BFR is sent;
after a RACH used for the BFR is received, a HARQ-ACK corresponding to an RAR used for the BFR is received;
a RACH used for the BFR is received and random access is to be completed; or
a RACH used for the BFR is received and the BFR of the SpCell is to be completed.

22. The method according to claim 20, wherein when the first cell is an SCell, the method further comprises:
transmitting, by a network device, the first channel within the first time period when one or more of the following cases occur:
an SR used for the BFR of the SCell is received and the SR is in a pending state pending;
a medium access control control element MAC CE used for the BFR is received before an uplink grant UL grant that is used to schedule initial transmission data and that uses a same automatic repeat request process HARQ process as the MAC CE used for the BFR is sent;
a medium access control control element MAC CE used for the BFR is received before a physical uplink shared channel PUSCH corresponding to a UL grant that is used to schedule initial transmission data and that uses a same automatic repeat request process HARQ process as the MAC CE used for the BFR is received;
an SR used for the BFR of the SCell is received before a UL grant that is used to schedule initial transmission data and that uses a same HARQ process as a MAC CE used for the BFR is sent; or
an SR used for the BFR of the SCell is received before a UL grant that is used to schedule initial transmission data and that uses a same HARQ process as a MAC CE used for the BFR is sent and a PUSCH corresponding to the UL grant is received.

23. The method according to any one of claims 20 to 22, wherein the first channel comprises one or more of the following: an uplink channel and a downlink channel, wherein
the uplink channel comprises one or more of the following: a configured grant physical uplink shared channel CG PUSCH, a semi-persistent scheduling physical downlink shared channel SPS PDSCH, a hybrid automatic repeat request feedback HARQ-ACK, a scheduling request SR, a physical random access channel, a random access message A, or a random access message 3; and
the downlink channel comprises one or more of the following: a physical downlink control channel PDCCH scrambled by a modulation and coding scheme-cell radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal or physical broadcast channel block SSB, system information, a paging message, a random access message 2, a random access message 4, a random access message B, or a semi-persistent scheduling physical downlink shared channel SPS PDSCH.

24. The method according to any one of claims 20 to 23, wherein the method further comprises:
sending second indication information, wherein the second indication information indicates to deactivate the first cell, and determining that the BFR succeeds or determining not to transmit the first channel in the first cell within the first time period.

25. The method according to any one of claims 20 to 24, wherein the first indication information is the MAC or DCI, and before sending the first indication information to the terminal device, the method further comprises:
sending first configuration information, wherein the first configuration information comprises configuration information of one or more cycles, the first time period is a time period in a target cycle, the target cycle is one of the one or more cycles, and the first indication information is used to activate a configuration for the target cycle in the first configuration information, so that the network device does not transmit the first channel within the first time period in the first cell.

26. The method according to any one of claims 20 to 25, wherein the first indication information is DCI, the DCI is carried on a physical downlink control channel PDCCH scrambled by a first radio network temporary identifier RNTI, and the PDCCH scrambled by the first RNTI does not belong to the first channel.

27. The method according to any one of claims 20 to 25, wherein the first indication information is DCI, the DCI comprises a first indication field, and the first indication field indicates to configure the first DTX configuration by using the DCI.

28. A communication method, wherein the method comprises:
sending first indication information to a terminal device, wherein the first indication information indicates a first DTX configuration, and the first DTX configuration comprises that the terminal device is in an inactive state within a first time period in a first cell.

29. The method according to claim 28, wherein the first DTX configuration comprises skipping transmitting a first channel in the first cell within the first time period, the first channel comprises one or more of the following signals: a CSI-RS used for BFR of the first cell or an SR used for the BFR of the first cell.

30. The method according to claim 28 or 29, wherein the method further comprises:
comprising a MAC CE used for the BFR in an MsgA or an Msg3.

31. The method according to claim 28 or 29, wherein when the first cell is an SpCell, the method further comprises:
a network device is in an active state within the first time period when one or more of the following cases occur:
a random access channel RACH is received and random access is to be completed; or
a RACH is received and the BFR of the SpCell is to be completed.

32. The method according to claim 28 or 29, wherein when the first cell is an SCell, the method further comprises:
a network device is in an active state within the first time period when one or more of the following cases occur:
a MAC CE used for the BFR is received before a UL grant that is used to schedule initial transmission data and that uses a same HARQ process as the MAC CE used for the BFR is sent;
a MAC CE used for the BFR is received before a PUSCH corresponding to a UL grant that is used to schedule initial transmission data and that uses a same HARQ process as the MAC CE used for the BFR is received;
a RACH is received and random access is to be completed; or
a RACH is received and the BFR of the SpCell is to be completed.

33. The method according to claim 28 or 29, wherein when the first cell is an SCell, the method further comprises:
when performing BFR, if there is no available uplink resource within the first time period, starting, by a network device, contention-based random access CBRA to perform BFR.

34. The method according to any one of claims 28 to 33, wherein the first channel comprises one or more of the following: an uplink channel and a downlink channel, wherein
the uplink channel comprises one or more of the following: a configured grant physical uplink shared channel CG PUSCH, a semi-persistent scheduling physical downlink shared channel SPS PDSCH, a hybrid automatic repeat request feedback HARQ-ACK, a scheduling request SR, a physical random access channel, a random access message A, or a random access message 3; and
the downlink signal comprises: a physical downlink control channel PDCCH scrambled by a modulation and coding scheme-cell radio network temporary identifier MCS-C-RNTI, a PDCCH scrambled by a power saving-radio network temporary identifier PS-RNTI, a PDCCH scrambled by a system information-radio network temporary identifier SI-RNTI, a PDCCH scrambled by a random access-radio network temporary identifier RA-RNTI, a PDCCH scrambled by a temporary cell-radio network temporary identifier TC-RNTI, a PDCCH scrambled by a paging-radio network temporary identifier P-RNTI, a PDCCH scrambled by a paging early indication-radio network temporary identifier PEI-RNTI, a synchronization signal or physical broadcast channel block SSB, system information, a paging message, a random access message 2, a random access message 4, a random access message B, or a semi-persistent scheduling physical downlink shared channel SPS PDSCH.

35. The method according to any one of claims 28 to 34, wherein the method further comprises:
sending second indication information, wherein the second indication information indicates to deactivate the first cell, and determining that the BFR succeeds or determining not to transmit the first channel in the first cell within the first time period.

36. The method according to any one of claims 28 to 35, wherein the first indication information is the MAC or DCI, and before sending the first indication information to the terminal device, the method further comprises:
sending first configuration information, wherein the first configuration information comprises configuration information of one or more cycles, the first time period is a time period in a target cycle, the target cycle is one of the one or more cycles, and the first indication information is used to activate a configuration for the target cycle in the first configuration information, so that the network device is in an inactive state within the first time period in the first cell.

37. The method according to any one of claims 28 to 35, wherein the first indication information is DCI, the DCI is carried on a PDCCH scrambled by a first RNTI, and the PDCCH scrambled by the first RNTI does not belong to the first channel.

38. The method according to any one of claims 28 to 35, wherein the first indication information is DCI, the DCI comprises a first indication field, and the first indication field indicates to configure the first DTX configuration by using the DCI.

39. A communication apparatus, comprising a module configured to perform the method according to any one of claims 1 to 19, or comprising a module configured to perform the method according to any one of claims 20 to 38.

40. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 19 through a logic circuit or by executing code instructions, or the processor is configured to implement the method according to any one of claims 20 to 38 through a logic circuit or by executing code instructions.

41. A computer-readable storage medium, wherein the computer-readable storage medium stores program instructions, and when the program instructions are run on a computer or a processor, the method according to any one of claims 1 to 19 is implemented, or the method according to any one of claims 20 to 38 is implemented.

42. A computer program product, wherein the computer program product comprises instructions, and when the instructions are executed, the method according to any one of claims 1 to 19 is implemented, or the method according to any one of claims 20 to 38 is implemented.

43. A chip system, wherein the chip system comprises at least one processor and an interface circuit, the interface circuit and the at least one processor are interconnected through a line, and the processor performs the method according to any one of claims 1 to 38 by running instructions.
